# EUROPEAN PATENT SPECIFICATION

(11) **EP 2 654 116 B1**
(45) Date of publication and mention of the grant of the patent: **06.08.2014**
(21) Application number: 11849060.6
(22) Date of filing: 08.12.2011
(51) Int. Cl.: H01M 8/04, H01M 8/00, H01M 8/06, H01M 8/10, H01M 8/12, H01M 8/24, F23L 17/00

(54) **POWER GENERATING SYSTEM AND METHOD OF OPERATING THE SAME**
STROMERZEUGUNGSSYSTEM UND BETRIEBSVERFAHREN DAFÜR
SYSTÈME DE GÉNÉRATION D'ÉNERGIE ET SON PROCÉDÉ DE FONCTIONNEMENT

(30) Priority: 13.12.2010 JP 2010276950
(43) Date of publication of application: 23.10.2013
(73) Proprietor: Panasonic Corporation, Osaka 571-8501 (JP)
(72) Inventor: YASUDA, Shigeki, Osaka 540-6207 (JP); YUKIMASA, Akinori, Osaka 540-6207 (JP); INOUE, Atsutaka, Osaka 540-6207 (JP); MORITA, Junji, Osaka 540-6207 (JP); TATSUI, Hiroshi, Osaka 540-6207 (JP)
(74) Representative: Grünecker, Kinkeldey, Stockmair & Schwanhäusser
(86) International application number: PCT/JP2011/006866
(87) International publication number: WO 2012/081204

(56) References cited:
- JP-A- 2006 073 446
- JP-A- 2007 095 542
- JP-A- 2008 135 267
- JP-A- 2008 159 460
- JP-A- 2008 210 631
- JP-A- 2009 021 047

## Description

### Technical Field

The present invention relates to a power generation system configured to supply heat and electricity and a method of operating the power generation system, and particularly to the configuration of the power generation system.

### Background Art

A cogeneration system supplies generated electric power to users for electric power loads and recovers and stores exhaust heat for hot water supply loads of the users, the exhaust heat being generated by the electric power generation. Known as this type of cogeneration system is a cogeneration system configured such that a fuel cell and a water heater operate by the same fuel (see PTL 1, for example). A cogeneration system disclosed in PTL 1 includes: a fuel cell; a heat exchanger configured to recover heat generated by the operation of the fuel cell; a hot water tank configured to store water having flowed through the heat exchanger to be heated; and a water heater configured to heat the water flowing out from the hot water tank up to a predetermined temperature, and is configured such that the fuel cell and the water heater operate by the same fuel.

Moreover, a fuel cell power generation apparatus provided inside a building is known, which is configured for the purpose of improving an exhaust performance of the fuel cell power generation apparatus (see PTL 2, for example). A power generation apparatus disclosed in PTL 2 is a fuel cell power generation apparatus provided and used in a building including an intake port and includes an air introducing port through which air in the building is introduced to the inside of the fuel cell power generation apparatus, an air discharging pipe through which the air in the fuel cell power generation apparatus is discharged to the outside of the building, and a ventilation unit. The ventilation unit introduces the air from the outside of the building through the intake port to the inside of the building, further introduces the air through the air introducing port to the inside of the fuel cell power generation apparatus, and discharges the air through the air discharging pipe to the outside of the building.

Further, a power generation apparatus including a duct extending in a vertical direction is known, which is configured for the purpose of improving the exhaust performance of an exhaust gas generated by a fuel cell provided inside a building (see PTL 3, for example). In a power generation apparatus disclosed in PTL 3, a duct extending inside a building in a vertical direction and having an upper end portion located outside the building is a double pipe, and a ventilating pipe and an exhaust pipe are coupled to the duct such that an exhaust gas or air flows through the inside or outside of the duct.

### Citation List

### Patent Literature

PTL 1: Japanese Laid-Open Patent Application Publication No. 2007-248009
PTL 2: Japanese Laid-Open Patent Application Publication No. 2006-73446
PTL 3: Japanese Laid-Open Patent Application Publication No. 2008-210631

### Summary of Invention

### Technical Problem

Here, in the case of providing the cogeneration system disclosed in PTL 1 in a building, the below-described configuration may be adopted in reference to the power generation apparatus disclosed in PTL 2. To be specific, the configuration is that: a cogeneration unit including a fuel cell and a hot water supply unit including a water heater are separately provided; a ventilation fan is provided in the cogeneration unit; and an exhaust passage causing the cogeneration unit and the water heater to communicate with each other is formed.

In this configuration, for example, in a case where the water heater is activated when the ventilation fan is operating, the exhaust gas discharged from the water heater may flows through the exhaust passage into the cogeneration unit depending on an operation amount of the ventilation fan. Then, one problem is that since the oxygen (oxidizing gas) concentration in a case decreases if the exhaust gas flows into the cogeneration unit, the concentration of the oxidizing gas supplied to the fuel cell decreases, and the power generation efficiency of the fuel cell deteriorates.

An object of the present invention is to provide a power generation system capable of stably generating electric power and having high durability in the case of providing an exhaust passage causing a fuel cell system and a combustion device to communicate with each other as above, and a method of operating the power generation system.

### Solution to Problem

To solve the above conventional problems, a power generation system according to the present invention includes: a fuel cell system including a fuel cell configured to generate electric power using a fuel gas and an oxidizing gas, a case configured to house the fuel cell, and a ventilator; a controller; a combustion device including a combustion air supply unit configured to supply combustion air; an air intake passage configured to supply air to the case; and a discharge passage formed to connect the case and an exhaust port of the combustion device and configured to discharge an exhaust gas from the fuel cell system and an exhaust gas from the combustion device to an atmosphere through an opening of the discharge passage, the opening being open to the atmosphere, wherein: the ventilator is configured to discharge a gas in the case to the discharge passage to ventilate an inside of the case; and in a case where the controller determines that the combustion device has operated when the ventilator is operating, the controller increases an operation amount of the ventilator.

Here, the expression "the combustion device has operated" denotes not only that the combustion device is supplied with a combustion fuel and combustion air, combusts the combustion fuel and the combustion air to generate a flue gas (exhaust gas), and discharges the exhaust gas to the discharge passage but also that the combustion air supply unit of the combustion device is activated to discharge the combustion air to the discharge passage.

Here, the expression "increases an operation amount of the ventilator" denotes increasing at least one of the flow rate and pressure of the gas discharged from the ventilator.

Moreover, the expression "in a case where the controller determines that the combustion device has operated ... increases an operation amount of the ventilator" denotes that the operation of the combustion device and the increase in the operation amount of the ventilator may be performed at the same time or one of the operation of the combustion device and the increase in the operation amount of the ventilator may be performed before the other is performed.

With this, by the operation of the combustion device when the ventilator is operating, the exhaust gas discharged from the combustion device can be prevented from flowing into the case. Even if the exhaust gas discharged from the combustion device flows into the case by the operation of the combustion device when the ventilator is operating, the further flow of the exhaust gas into the case can be prevented and the exhaust gas in the case can be discharged to the outside of the case by increasing the operation amount of the ventilator. Therefore, the decrease in the oxygen concentration in the case can be suppressed. On this account, the electric power generation of the fuel cell can be stably performed, and the durability of the power generation system can be improved.

In the power generation system according to the present invention, in a case where an activation command of the combustion device is input, the controller may increase the operation amount of the ventilator.

In the power generation system according to the present invention, in a case where at least one of discharging of the exhaust gas of the combustion device and supply of the combustion air of the combustion device is detected when the ventilator is operating, the controller may increase the operation amount of the ventilator.

The power generation system according to the present invention may further include: the air intake passage formed at an air supply port of the case and configured to supply air to the fuel cell system from an opening of the air intake passage, the opening being open to the atmosphere; and a first temperature detector provided at least one of on the air intake passage, on the discharge passage, and in the case, wherein in a case where a temperature detected by the first temperature detector is higher than a first temperature, the controller may increase the operation amount of the ventilator.

The power generation system according to the present invention may further include: the air intake passage formed at an air supply port of the case and configured to supply air to the fuel cell system from an opening of the air intake passage, the opening being open to the atmosphere; and a first temperature detector provided at least one of on the air intake passage, on the discharge passage, and in the case, wherein in a case where a temperature detected by the first temperature detector is lower than a second temperature, the controller may increase the operation amount of the ventilator.

The power generation system according to the present invention may further include: the air intake passage formed at an air supply port of the case and configured to supply air to the fuel cell system from an opening of the air intake passage, the opening being open to the atmosphere; and a first temperature detector provided at least one of on the air intake passage, on the discharge passage, and in the case, wherein in a case where a difference between temperatures detected by the first temperature detector before and after a predetermined time is higher than a third temperature, the controller may increase the operation amount of the ventilator.

The power generation system according to the present invention may further include a pressure detector configured to detect pressure in the discharge passage, wherein in a case where the pressure detected by the pressure detector is higher than first pressure, the controller may increase the operation amount of the ventilator.

The power generation system according to the present invention may further include a first flow rate detector configured to detect a flow rate of a gas flowing through the discharge passage, wherein in a case where the flow rate detected by the first flow rate detector is higher than a first flow rate, the controller may increase the operation amount of the ventilator.

The power generation system according to the present invention may further include a second flow rate detector configured to detect a flow rate of the combustion air supplied by the combustion air supply unit, wherein in a case where the flow rate detected by the second flow rate detector is higher than a second flow rate, the controller may increase the operation amount of the ventilator.

In the power generation system according to the present invention, the air intake passage may be formed so as to: cause the case and the air supply port of the combustion device to communicate with each other; supply the air to the fuel cell system and the combustion device from the opening of the air intake passage, the opening being open to the atmosphere; and be heat-exchangeable with the exhaust passage.

The power generation system according to the present invention may further include a second temperature detector provided on the air intake passage, wherein in a case where a temperature detected by the second temperature detector is higher than a fourth temperature, the controller may increase the operation amount of the ventilator.

Further, in the power generation system according to the present invention, the fuel cell system may further include a hydrogen generator including a reformer configured to generate a hydrogen-containing gas from a raw material and steam.

A method of operating a power generation system according to the present invention is a method of operating a power generation system, the power generation system including: a fuel cell system including a fuel cell configured to generate electric power using a fuel gas and an oxidizing gas, a case configured to house the fuel cell, and a ventilator; a combustion device including a combustion air supply unit configured to supply combustion air; and a discharge passage formed to cause the case and an exhaust port of the combustion device to communicate with each other and configured to discharge an exhaust gas from the fuel cell system and an exhaust gas from the combustion device to an atmosphere through an opening of the discharge passage, the opening being open to the atmosphere, wherein: the ventilator is configured to discharge a gas in the case to the discharge passage to ventilate an inside of the case; and in a case where the combustion device is activated when the ventilator is operating, an operation amount of the ventilator is increased.

With this, by the operation of the combustion device when the ventilator is operating, the exhaust gas discharged from the combustion device can be prevented from flowing into the case. Even if the exhaust gas discharged from the combustion device flows into the case by the operation of the combustion device when the ventilator is operating, the further flow of the exhaust gas into the case can be prevented and the exhaust gas in the case can be discharged to the outside of the case by increasing the operation amount of the ventilator. Therefore, the decrease in the oxygen concentration in the case can be suppressed. On this account, the electric power generation of the fuel cell can be stably performed, and the durability of the power generation system can be improved.

### Advantageous Effects of Invention

According to the power generation system of the present invention, even if the combustion device operates when the ventilator is operating, the decrease in the oxidizing gas (oxygen) concentration in the case can be suppressed. Therefore, the electric power generation of the fuel cell can be stably performed, and the durability of the power generation system can be improved.

### Brief Description of Drawings

[Fig. 1] Fig. 1 is a schematic diagram showing the schematic configuration of a power generation system according to Embodiment 1 of the present invention.
[Fig. 2] Fig. 2 is a flow chart schematically showing an exhaust gas inflow suppressing operation of the power generation system according to Embodiment 1.
[Fig. 3] Fig. 3 is a schematic diagram showing the schematic configuration of the power generation system of Modification Example 1 of Embodiment 1.
[Fig. 4] Fig. 4 is a flow chart schematically showing the exhaust gas inflow suppressing operation of the power generation system of Modification Example 1 of Embodiment 1.
[Fig. 5] Fig. 5 is a schematic diagram showing the schematic configuration of the power generation system according to Embodiment 2 of the present invention.
[Fig. 6] Fig. 6 is a flow chart schematically showing the exhaust gas inflow suppressing operation of the power generation system according to Embodiment 2.
[Fig. 7] Fig. 7 is a schematic diagram showing the schematic configuration of the power generation system of Modification Example 1 of Embodiment 2.
[Fig. 8] Fig. 8 is a schematic diagram showing the schematic configuration of the power generation system of Modification Example 2 of Embodiment 2.
[Fig. 9] Fig. 9 is a schematic diagram showing the schematic configuration of the power generation system of Modification Example 3 of Embodiment 2.
[Fig. 10] Fig. 10 is a flow chart schematically showing the exhaust gas inflow suppressing operation of the power generation system of Modification Example 3 of Embodiment 2.
[Fig. 11] Fig. 11 is a schematic diagram showing the schematic configuration of the power generation system of Modification Example 4 of Embodiment 2.
[Fig. 12] Fig. 12 is a flow chart schematically showing the exhaust gas inflow suppressing operation of the power generation system of Modification Example 4 of Embodiment 2.
[Fig. 13] Fig. 13 is a schematic diagram showing the schematic configuration of the power generation system of Modification Example 5 of Embodiment 2.
[Fig. 14] Fig. 14 is a flow chart schematically showing the exhaust gas inflow suppressing operation of the power generation system of Modification Example 5 of Embodiment 2.
[Fig. 15] Fig. 15 is a schematic diagram showing the schematic configuration of the power generation system according to Embodiment 3 of the present invention.
[Fig. 16] Fig. 16 is a schematic diagram showing the schematic configuration of the power generation system according to Embodiment 4.
[Fig. 17] Fig. 17 is a flow chart schematically showing the exhaust gas inflow suppressing operation of the power generation system according to Embodiment 4.
[Fig. 18] Fig. 18 is a schematic diagram showing the schematic configuration of the power generation system according to Embodiment 5 of the present invention.

### Description of Embodiments

Hereinafter, preferred embodiments of the present invention will be explained in reference to the drawings. In the drawings, the same reference signs are used for the same or corresponding components, and a repetition of the same explanation is avoided. Moreover, in the drawings, only components necessary to explain the present invention are shown, and the other components are not shown. Further, the present invention is not limited to the following embodiments.

### Embodiment 1

A power generation system according to Embodiment 1 of the present invention includes: a fuel cell system including a fuel cell and a case; a ventilator; a controller; a combustion device; and a discharge passage. In a case where the controller determines that the combustion device has operated when the ventilator is operating, the controller increases an operation amount of the ventilator.

Here, "the operation of the combustion device" denotes not only that the combustion device is supplied with a combustion fuel and combustion air, combusts the combustion fuel and the combustion air to generate a flue gas (exhaust gas), and discharges the exhaust gas to the discharge passage but also that a combustion air supply unit of the combustion device is activated to discharge the combustion air to the discharge passage.

### Configuration of Power Generation System

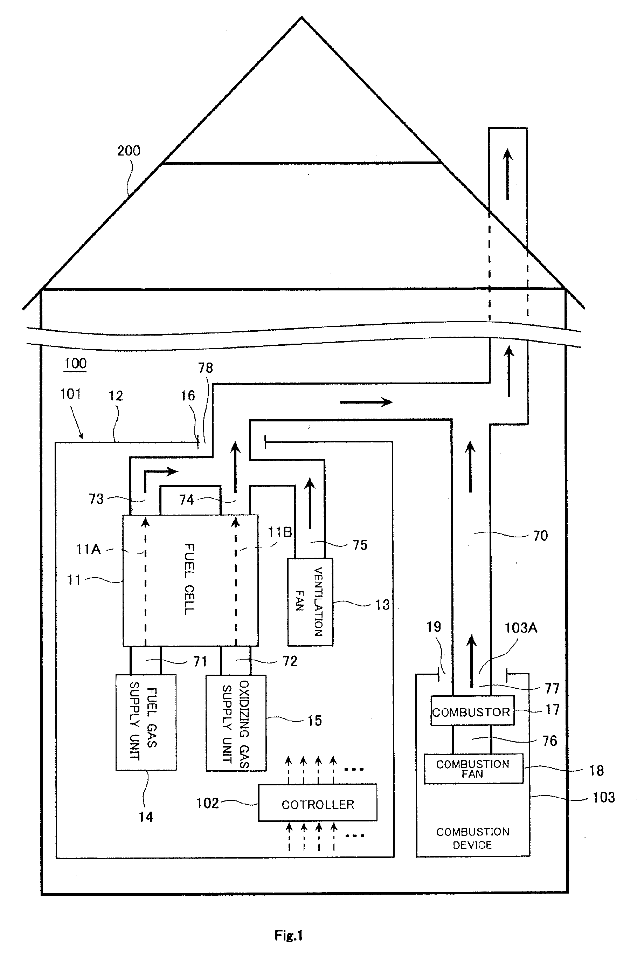

Fig. 1 is a schematic diagram showing the schematic configuration of the power generation system according to Embodiment 1 of the present invention.

As shown in Fig. 1, a power generation system 100 according to Embodiment 1 of the present invention is provided in a building 200. The power generation system 100 includes a fuel cell system 101, a controller 102, a combustion device 103, an air intake passage 78, and a discharge passage 70. The fuel cell system 101 includes a fuel cell 11, a case 12, and a ventilation fan 13. The discharge passage 70 is formed so as to cause the case 12 of the fuel cell system 101 and an exhaust port 103A of the combustion device 103 to communicate with each other (so as to connect the case 12 of the fuel cell system 101 and the exhaust port 103A of the combustion device 103). In a case where an activation signal of the combustion device 103 is input when the ventilation fan 13 is operating, the controller 102 increases the operation amount of the ventilation fan 13 to increase the operation amount of the ventilation fan 13.

In Embodiment 1, the power generation system 100 is provided in the building 200. However, the present embodiment is not limited to this. The power generation system 100 may be provided outside the building 200 as long as the discharge passage 70 is formed so as to cause the case 12 of the fuel cell system 101 and the exhaust port 103A of the combustion device 103 to communicate with each other.

The fuel cell 11, the ventilation fan 13, a fuel gas supply unit 14, and an oxidizing gas supply unit 15 are provided in the case 12 of the fuel cell system 101. The controller 102 is also provided in the case 12. In Embodiment 1, the controller 102 is provided in the case 12 of the fuel cell system 101. However, the present embodiment is not limited to this. The controller 102 may be provided in the combustion device 103 or may be provided separately from the case 12 and the combustion device 103.

An air supply port 16 penetrating a wall constituting the case 12 in a thickness direction of the wall is formed at an appropriate position of the wall. A pipe constituting the discharge passage 70 is inserted through the air supply port 16 such that a gap is formed between the air supply port 16 and the discharge passage 70. The gap between the air supply port 16 and the discharge passage 70 constitutes the air intake passage 78. With this, the air outside the power generation system 100 is supplied through the air intake passage 78 to the inside of the case 12.

In Embodiment 1, the hole through which the pipe constituting the discharge passage 70 is inserted and the air supply port 16 formed on the air intake passage and used as an air intake port of the case 12 are constituted by one hole. However, the present embodiment is not limited to this. The hole through which the pipe constituting the discharge passage 70 is inserted and the hole constituting the air supply port 16 may be separately formed on the case 12. The air supply port 16 (the air intake passage 78) may be constituted by one hole on the case 12 or may be constituted by a plurality of holes on the case 12. Further, the air intake passage 78 may be constituted by inserting a pipe into the air supply port 16.

The fuel gas supply unit 14 may have any configuration as long as it can supply a fuel gas (hydrogen gas) to the fuel cell 11 while adjusting the flow rate of the fuel gas. The fuel gas supply unit 14 may be configured by a device, such as a hydrogen generator, a hydrogen bomb, or a hydrogen absorbing alloy, configured to supply the hydrogen gas. The fuel cell 11 (to be precise, an inlet of a fuel gas channel 11 A of the fuel cell 11) is connected to the fuel gas supply unit 14 through a fuel gas supply passage 71.

The oxidizing gas supply unit 15 may have any configuration as long as it can supply an oxidizing gas (air) to the fuel cell 11 while adjusting the flow rate of the oxidizing gas. The oxidizing gas supply unit 15 may be constituted by a fan, a blower, or the like. The fuel cell 11 (to be precise, an inlet of an oxidizing gas channel 11B of the fuel cell 11) is connected to the oxidizing gas supply unit 15 through an oxidizing gas supply passage 72.

The fuel cell 11 includes an anode and a cathode (both not shown). In the fuel cell 11, the fuel gas supplied to the fuel gas channel 11A is supplied to the anode while the fuel gas is flowing through the fuel gas channel 11 A. The oxidizing gas supplied to the oxidizing gas channel 11B is supplied to the cathode while the oxidizing gas is flowing through the oxidizing gas channel 11B. The fuel gas supplied to the anode and the oxidizing gas supplied to the cathode react with each other to generate electricity and heat.

The generated electricity is supplied to an external electric power load (for example, a home electrical apparatus) by an electric power conditioner, not shown. The generated heat is recovered by a heat medium flowing through a heat medium channel, not shown. The heat recovered by the heat medium can be used to, for example, heat water.

In Embodiment 1, each of various fuel cells, such as a polymer electrolyte fuel cell, a direct internal reforming type solid-oxide fuel cell, and an indirect internal reforming type solid-oxide fuel cell, may be used as the fuel cell 11. In Embodiment 1, the fuel cell 11 and the fuel gas supply unit 14 are configured separately. However, the present embodiment is not limited to this. Like a solid-oxide fuel cell, the fuel gas supply unit 14 and the fuel cell 11 may be configured integrally. In this case, the fuel cell 11 and the fuel gas supply unit 14 are configured as one unit covered with a common heat insulating material, and a combustor 14b described below can heat not only a reformer 14a but also the fuel cell 11. In the direct internal reforming type solid-oxide fuel cell, since the anode of the fuel cell 11 has the function of the reformer 14a, the anode of the fuel cell 11 and the reformer 14a may be configured integrally. Further, since the configuration of the fuel cell 11 is similar to that of a typical fuel cell, a detailed explanation thereof is omitted.

An upstream end of an off fuel gas passage 73 is connected to an outlet of the fuel gas channel 11A. A downstream end of the off fuel gas passage 73 is connected to the discharge passage 70. An upstream end of an off oxidizing gas passage 74 is connected to an outlet of the oxidizing gas channel 11B. A downstream end of the off oxidizing gas passage 74 is connected to the discharge passage 70.

With this, the fuel gas unconsumed in the fuel cell 11 (hereinafter referred to as an "off fuel gas") is discharged from the outlet of the fuel gas channel 11A through the off fuel gas passage 73 to the discharge passage 70. The oxidizing gas unconsumed in the fuel cell 11 (hereinafter referred to as an "off oxidizing gas") is discharged from the outlet of the oxidizing gas channel 11B through the off oxidizing gas passage 74 to the discharge passage 70. The off fuel gas discharged to the discharge passage 70 is diluted by the off oxidizing gas to be discharged to the outside of the building 200.

The ventilation fan 13 is connected to the discharge passage 70 through a ventilation passage 75. The ventilation fan 13 may have any configuration as long as it can ventilate the inside of the case 12. With this, the air outside the power generation system 100 is supplied through the air intake passage 78 to the inside of the case 12, and the gas (mainly, air) in the case 12 is discharged through the ventilation passage 75 and the discharge passage 70 to the outside of the building 200 by activating the ventilation fan 13. Thus, the inside of the case 12 is ventilated.

In Embodiment 1, the fan is used as a ventilator. However, the present embodiment is not limited to this. A blower may be used as the ventilator. The ventilation fan 13 is provided in the case 12. However, the present embodiment is not limited to this. The ventilation fan 13 may be provided in the discharge passage 70. In this case, it is preferable that the ventilation fan 13 be provided upstream of a branch portion of the discharge passage 70.

In Embodiment 1, the controller 102 increases the operation amount of the ventilation fan 13 itself to increase the operation amount of the ventilation fan 13. However, the present embodiment is not limited to this. Embodiment 1 may be configured such that: a passage resistance adjusting unit capable of adjusting passage resistance is provided on a passage through which supply air of the ventilation fan 13 flows or on a passage (the ventilation passage 75 and the discharge passage 70) through which ejection air of the ventilation fan 13 flows; and the controller 102 controls the passage resistance adjusting unit to increase the operation amount of the ventilation fan 13. A solenoid valve capable of adjusting an opening degree may be used as the passage resistance adjusting unit. Or, the ventilation fan 13 may be configured to have a passage resistance adjusting function.

As above, in Embodiment 1, the off fuel gas, the off oxidizing gas, and the gas in the case 12 by the operation of the ventilation fan 13 are exemplified as the exhaust gas discharged from the fuel cell system 101. The exhaust gas discharged from the fuel cell system 101 is not limited to these gases. For example, in a case where the fuel gas supply unit 14 is constituted by a hydrogen generator, the exhaust gas discharged from the fuel cell system 101 may be the gas (a flue gas, a hydrogen-containing gas, or the like) discharged from the hydrogen generator.

The combustion device 103 includes a combustor 17 and a combustion fan (combustion air supply unit) 18. The combustor 17 and the combustion fan 18 are connected to each other through a combustion air supply passage 76. The combustion fan 18 may have any configuration as long as it can supply combustion air to the combustor 17. The combustion fan 18 may be constituted by a fan, a blower, or the like.

A combustible gas, such as a natural gas, and a combustion fuel, such as a liquid fuel, are supplied to the combustor 17 from a combustion fuel supply unit, not shown. One example of the liquid fuel is kerosene. The combustor 17 combusts the combustion air supplied from the combustion fan 18 and the combustion fuel supplied from the combustion fuel supply unit to generate heat and a flue gas. The generated heat can be used to heat water. To be specific, the combustion device 103 may be used as a boiler.

An upstream end of an exhaust gas passage 77 is connected to the combustor 17, and a downstream end of the exhaust gas passage 77 is connected to the discharge passage 70. With this, the flue gas generated in the combustor 17 is discharged through the exhaust gas passage 77 to the discharge passage 70. To be specific, the flue gas generated in the combustor 17 is discharged to the discharge passage 70 as the exhaust gas discharged from the combustion device 103. The flue gas discharged to the discharge passage 70 flows through the discharge passage 70 to be discharged to the outside of the building 200.

An air supply port 19 penetrating a wall constituting the combustion device 103 in a thickness direction of the wall is formed at an appropriate position of the wall. A pipe constituting the discharge passage 70 is inserted through the air supply port 19 such that a gap is formed between the air supply port 19 and the discharge passage 70. The gap between the air supply port 19 and the discharge passage 70 constitutes the air intake passage 78. With this, the air outside the power generation system 100 is supplied through the air intake passage 78 to the inside of the combustion device 103.

To be specific, the discharge passage 70 branches, and two upstream ends thereof are respectively connected to the air supply port 16 and the air supply port 19. The discharge passage 70 is formed to extend up to the outside of the building 200, and a downstream end (opening) thereof is open to the atmosphere. With this, the discharge passage 70 causes the case 12 and the exhaust port 103A of the combustion device 103 to communicate with each other.

In Embodiment 1, the hole through which the pipe constituting the discharge passage 70 is inserted and the hole constituting the air supply port 19 are constituted by one hole 19. However, the present embodiment is not limited to this. The hole through which the pipe constituting the discharge passage 70 is inserted (the hole to which the pipe constituting the discharge passage 70 is connected) and the hole constituting the air supply port 19 may be separately formed on the combustion device 103. The air supply port 19 may be constituted by one hole on the combustion device 103 or may be constituted by a plurality of holes on the combustion device 103.

The controller 102 may be any device as long as it controls respective devices constituting the fuel cell system 101 and the combustion device 103. The controller 102 includes a calculation processing portion, such as a microprocessor or a CPU, and a storage portion, such as a memory, configured to store programs for executing respective control operations. In the controller 102, the calculation processing portion reads out and executes a predetermined control program stored in the storage portion. Thus, the controller 102 processes the information and performs various control operations regarding the fuel cell system 101 and the combustion device 103.

The controller 102 may be constituted by a single controller or may be constituted by a group of a plurality of controllers which cooperate to control the fuel cell system 101 and the combustion device 103. For example, the controller 102 may be constituted by a first controller configured to control the fuel cell system 101 and a second controller configured to control the combustion device 103. In this case, each of the first controller and the second controller includes a communication portion. The first and second controllers send and receive signals to and from each other through the calculation processing portions and communication portions of the first and second controllers. Examples of a communication medium connecting the first controller and the second controller 102B may be a wireless LAN, a local area network, a wide area network, public communication, the Internet, a value-added network, and a commercial network.

Further, the controller 102 may be constituted by a microcomputer or may be constituted by a MPU, a PLC (Programmable Logic Controller), a logic circuit, or the like.

### Operations of Power Generation System

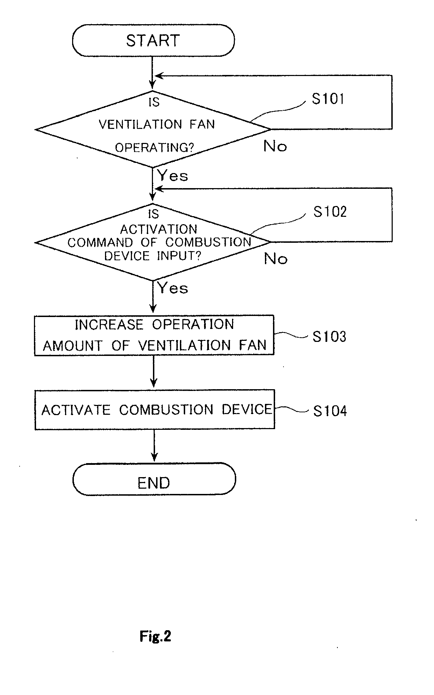

Next, the operations of the power generation system 100 according to Embodiment 1 will be explained in reference to Figs. 1 and 2.

Fig. 2 is a flow chart schematically showing the exhaust gas inflow suppressing operation of the power generation system according to Embodiment 1.

As shown in Fig. 2, the controller 102 confirms whether or not the ventilation fan 13 is operating (Step S101). In a case where the ventilation fan 13 is not operating (No in Step S101), the controller 102 repeats Step S101 until the controller 102 confirms that the ventilation fan 13 is operating. In contrast, in a case where the ventilation fan 13 is operating (Yes in Step S101), the controller 102 proceeds to Step S102.

Examples of a case where the ventilation fan 13 becomes the operating state are a case where the fuel cell system 101 performs the electric power generating operation and the ventilation fan 13 operates in accordance with the electric power generating operation to ventilate the inside of the case 12 and a case where the ventilation fan 13 operates to ventilate the inside of the case 12 regardless of whether or not the fuel cell system 101 performs the electric power generating operation.

In Step S102, the controller 102 confirms whether or not an activation command of the combustion device 103 is input. Examples of a case where the activation command of the combustion device 103 is input are a case where a user of the power generation system 100 operates a remote controller, not shown, to instruct the activation of the combustion device 103 and a case where a preset operation start time of the combustion device 103 has come.

In a case where the activation command of the combustion device 103 is not input to the controller 102 (No in Step S102), the controller 102 repeats Step S102 until the activation command of the combustion device 103 is input. In this case, the controller 102 may return to Step S101 and repeat Steps S101 and S102 until the controller 102 confirms that the ventilation fan 13 is operating and the activation command of the combustion device 103 is input.

In contrast, in a case where the activation command of the combustion device 103 is input (Yes in Step S102), the controller 102 proceeds to Step S103. In Step S103, the controller 102 increases the operation amount of the ventilation fan 13. At this time, in order that the exhaust gas discharged from the combustion device 103 is prevented from flowing into the case 12, it is preferable that the controller 102 control the ventilation fan 13 such that static pressure of the ventilation fan 13 becomes higher than ejecting pressure generated when the combustion fan 18 operates.

Next, the controller 102 outputs the activation command to the combustion device 103 to activate the combustion device 103 (Step S104). With this, in the combustion device 103, the combustion air is supplied from the combustion fan 18 to the combustor 17, and the combustion fuel is supplied from the combustion fuel supply unit (not shown) to the combustor 17. The combustor 17 combusts the supplied combustion fuel and combustion air to generate the flue gas.

The flue gas (the exhaust gas discharged from the combustion device 103) generated in the combustion device 103 flows through the discharge passage 70 to be discharged to the outside of the building 200. At this time, a part of the flue gas flowing through the discharge passage 70 may flow through the off fuel gas passage 73, the off oxidizing gas passage 74, and the ventilation passage 75 into the case 12. However, in the power generation system 100 according to Embodiment 1, since the operation amount of the ventilation fan 13 is increased, the flue gas is prevented from flowing into the case 12.

In Embodiment 1, the operation amount of the ventilation fan 13 is increased before the combustion device 103 is activated. However, the present embodiment is not limited to this. Increasing the operation amount of the ventilation fan 13 and activating the combustion device 103 may be performed at the same time. Or, the operation amount of the ventilation fan 13 may be increased after the combustion device 103 is activated.

In this case, a part of the flue gas flowing through the discharge passage 70 sometimes flows through the off fuel gas passage 73, the off oxidizing gas passage 74, and the ventilation passage 75 into the case 12. However, by increasing the operation amount of the ventilation fan 13, the further flow of the flue gas into the case 12 can be prevented. In addition, by increasing the operation amount of the ventilation fan 13, the flue gas flowed into the case 12 can be discharged to the outside of the case 12.

As above, in the power generation system 100 according to Embodiment 1, in a case where the combustion device 103 operates when the ventilation fan 13 is operating, the exhaust gas from the combustion device 103 can be prevented from flowing into the case 12. In addition, even if the exhaust gas from the combustion device 103 flows into the case 12, the exhaust gas in the case 12 can be discharged to the outside of the case 12 by increasing the operation amount of the ventilation fan 13.

Therefore, in the power generation system 100 according to Embodiment 1, the decrease in the oxygen concentration in the case 12 and the decrease in the power generation efficiency of the fuel cell 11 can be suppressed, and the durability of the power generation system 100 can be improved.

Here, in a case where a desulfurizer configured to desulfurize a sulfur compound contained in a natural gas or the like is not provided in the combustion device 103, SOₓ is generated by the combustion operation of the combustion device 103. Then, if the generated SOₓ flows through the discharge passage 70 into the case 12 to be supplied to the cathode of the fuel cell 11, the poisoning of the catalyst contained in the cathode may be accelerated.

However, in the power generation system 100 according to Embodiment 1, the exhaust gas (containing SOₓ) from the combustion device 103 is prevented from flowing into the case 12 as described above. Therefore, the SOₓ can be prevented from being supplied to the cathode of the fuel cell 11. Even if the SOₓ flows into the case 12, the SOₓ can be discharged to the outside of the case 12 by increasing the operation amount of the ventilation fan 13.

Therefore, in the power generation system 100 according to Embodiment 1, the poisoning of the cathode of the fuel cell 11 and the decrease in the power generation efficiency of the fuel cell 11 can be suppressed, and the durability of the power generation system 100 can be improved.

When the fuel cell 11 is generating electric power, the temperature in the case 12 tends to increase by heat generation of the fuel cell 11. One problem is that in a case where the pressure in the discharge passage 70 is increased by the operation of the combustion device 103, the inside of the case 12 cannot be ventilated adequately and is increased in temperature, and auxiliary devices (for example, the controller 102) in the case 12 cannot be maintained at a temperature at which the auxiliary devices can normally operate.

If each of the temperatures of the auxiliary devices becomes higher than the temperature at which the auxiliary devices can normally operate, the auxiliary devices do not function normally. Therefore, there is a possibility that the efficiencies of the auxiliary devices deteriorate, the efficiency of the fuel cell system 101 deteriorates, and furthermore, the fuel cell system 101 stops. Even if the auxiliary devices temporarily, normally function, the heat deterioration of materials used for the auxiliary devices may occur, and the lives of the auxiliary devices may significantly decrease.

However, in the power generation system 100 according to Embodiment 1, by increasing the operation amount of the ventilation fan 13, the gas in the case 12 can be adequately discharged to the discharge passage 70, and the inside of the case 12 can be adequately ventilated. Therefore, the increase in the temperature in the case 12 and the decrease in the efficiencies of the auxiliary devices can be suppressed, and the durability of the fuel cell system 101 can be improved.

Further, in the power generation system 100 according to Embodiment 1, even if the combustible gas leaks into the case 12 in a case where the combustion fan 18 operates when the ventilation fan 13 is operating, the combustible gas can be further discharged to the outside of the case 12, and therefore, to the outside of the power generation system 100. On this account, the ignition of the combustible gas in the case 12 can be further suppressed.

In Embodiment 1, the discharge passage 70, the off fuel gas passage 73, the off oxidizing gas passage 74, and the exhaust gas passage 77 are explained as different passages. However, the present embodiment is not limited to this. These passages may be regarded as one discharge passage 70.

In the above exhaust gas inflow suppressing operation, the operation of the combustion device 103 is explained as the operation of generating the flue gas. However, the present embodiment is not limited to this. The operation of the combustion device 103 may be the operation of operating the combustion fan 18 of the combustion device 103.

### Modification Example 1

Next, the power generation system of Modification Example 1 of Embodiment 1 will be explained.

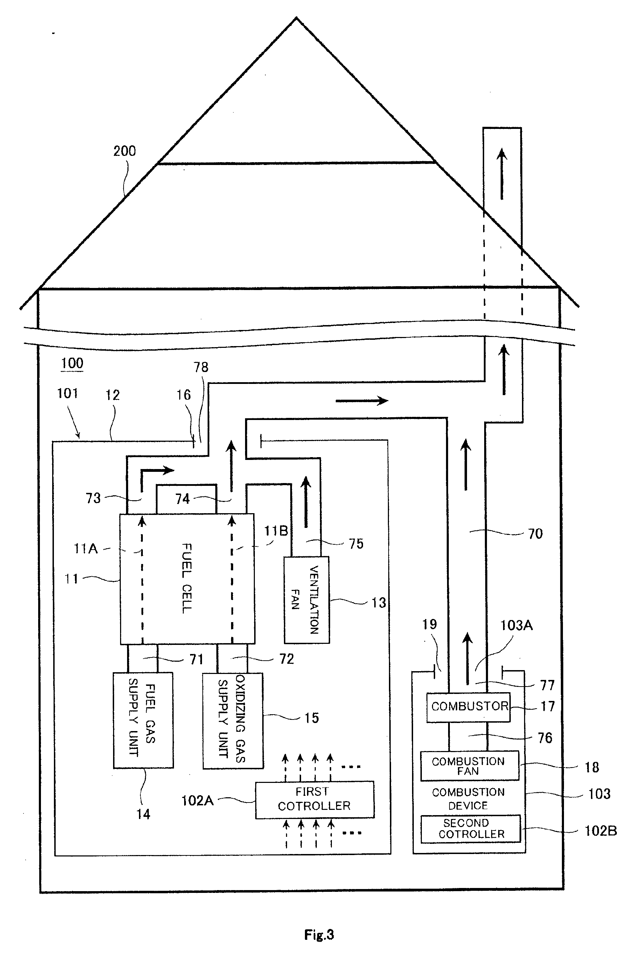

Fig. 3 is a schematic diagram showing the schematic configuration of the power generation system of Modification Example 1 of Embodiment 1.

As shown in Fig. 3, the power generation system 100 of Modification Example 1 is the same in basic configuration as the power generation system 100 according to Embodiment 1 but is different from the power generation system 100 according to Embodiment 1 in that the controller 102 is constituted by a first controller 102A and a second controller 102B. In Modification Example 1, the first controller 102A is configured to control the fuel cell system 101, and the second controller 102B is configured to control the combustion device 103.

Each of the first controller 102A and the second controller 102B may be any device as long as it controls respective devices constituting the fuel cell system 101 or the combustion device 103. Each of the first controller 102A and the second controller 102B includes a calculation processing portion, such as a microprocessor or a CPU, and a storage portion, such as a memory, configured to store programs for executing respective control operations. In the first controller 102A, the calculation processing portion reads out and executes a predetermined control program stored in the storage portion. Thus, the first controller 102A processes the information and performs various control operations, such as the above control operations, regarding the fuel cell system 101. In the second controller 102B, the calculation processing portion reads out and executes a predetermined control program stored in the storage portion. Thus, the second controller 102B processes the information and performs various control operations, such as the above control operations, regarding the combustion device 103.

Each of the first controller 102A and the second controller 102B may be constituted by a single controller or may be constituted by a group of a plurality of controllers which cooperate to execute control operations of the fuel cell system 101 and the combustion device 103. In addition, each of the first controller 102A and the second controller 102B may be constituted by a microcomputer or may be constituted by a MPU, a PLC (Programmable Logic Controller), a logic circuit or the like.

In Embodiment 1, the first controller 102A is configured to control only the fuel cell system 101. However, the present embodiment is not limited to this. The first controller 102A may be configured to control one or more devices among the respective devices constituting the power generation system 100 except for the fuel cell system 101. Similarly, the second controller 102B may be configured to control one or more devices among the respective devices constituting the power generation system 100 except for the combustion device 103.

Each of the first controller 102A and the second controller 102B includes a communication portion. The first and second controllers 102A and 102B send and receive signals to and from each other through the calculation processing portions and communication portions of the first and second controllers 102A and 102B. Examples of a communication medium connecting the first controller 102A and the second controller 102B may be a wireless LAN, a local area network, a wide area network, public communication, the Internet, a value-added network, and a commercial network.

### Operations of Power Generation System

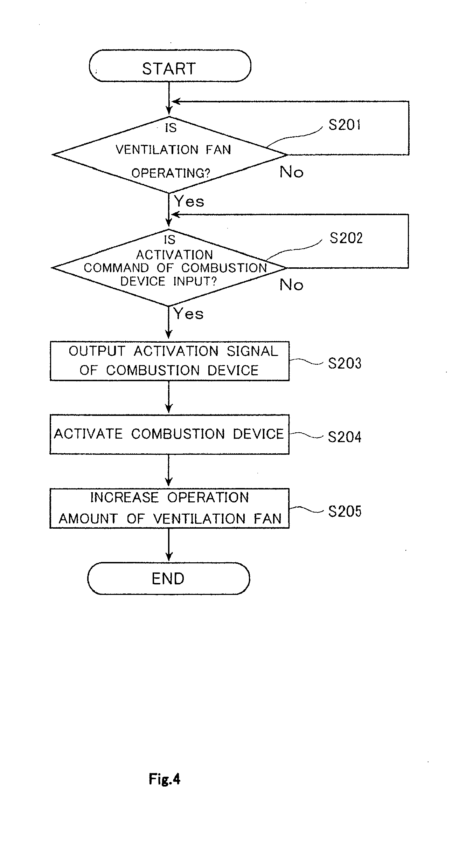

Fig. 4 is a flow chart schematically showing the exhaust gas inflow suppressing operation of the power generation system of Modification Example 1 of Embodiment 1.

As shown in Fig. 4, the first controller 102A confirms whether or not the ventilation fan 13 is operating (Step S201). In a case where the ventilation fan 13 is not operating (No in Step S201), the first controller 102A repeats Step S201 until the first controller 102A confirms that the ventilation fan 13 is operating. In contrast, in a case where the ventilation fan 13 is operating (Yes in Step S201), the first controller 102A proceeds to Step S202.

In Step S202, the calculation processing portion of the second controller 102B confirms whether or not the activation command of the combustion device 103 is input to the calculation processing portion of the second controller 102B. In a case where the activation command of the combustion device 103 is not input (No in Step S202), the calculation processing portion of the second controller 102B repeats Step S202 until the activation command of the combustion device 103 is input to the calculation processing portion.

In contrast, in a case where the activation command of the combustion device 103 is input (Yes in Step S202), the calculation processing portion of the second controller 102B proceeds to Step S203. In Step S203, the calculation processing portion of the second controller 102B outputs the activation signal of the combustion device 103 to the first controller 102A through a communication portion of the combustion device 103. Next, the calculation processing portion of the second controller 102B activates the combustion device 103 (Step S204).

When the first controller 102A receives the activation signal from the second controller 102B, the first controller 102A increases the operation amount of the ventilation fan 13 (Step S205). At this time, in order that the exhaust gas discharged from the combustion device 103 is prevented from flowing into the case 12, it is preferable that the first controller 102A control the ventilation fan 13 such that the static pressure of the ventilation fan 13 becomes higher than the ejecting pressure generated when the combustion fan 18 operates.

The power generation system 100 of Modification Example 1 configured as above also has the same operational advantages as the power generation system 100 according to Embodiment 1.

### Embodiment 2

The power generation system according to Embodiment 2 of the present invention is configured such that in a case where the discharging of the exhaust gas of the combustion device or the supply of the combustion air of the combustion device is detected when the ventilator is operating, the controller determines that the combustion device has operated and increases the operation amount of the ventilator.

### Configuration of Power Generation System

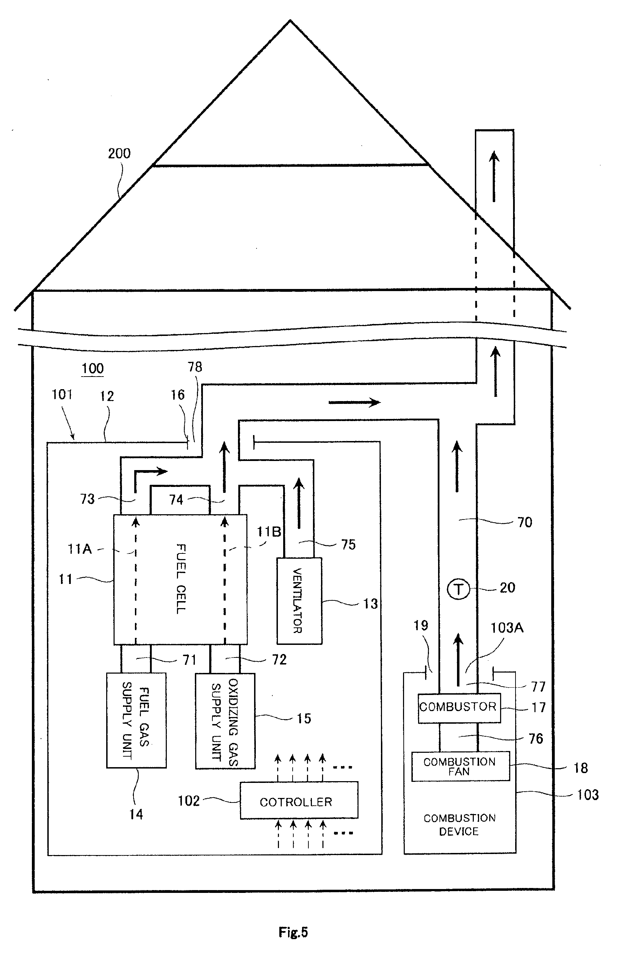

Fig. 5 is a schematic diagram showing the schematic configuration of the power generation system according to Embodiment 2 of the present invention.

As shown in Fig. 5, the power generation system 100 according to Embodiment 2 of the present invention is the same in basic configuration as the power generation system 100 according to Embodiment 1 but is different from the power generation system 100 according to Embodiment 1 in that a first temperature detector 20 is provided on the discharge passage 70. The first temperature detector 20 may have any configuration as long as it can detect the temperature of the gas in the discharge passage 70. Examples of the first temperature detector 20 are a thermocouple and an infrared sensor. In Embodiment 2, the first temperature detector 20 is provided inside the discharge passage 70. However, the present embodiment is not limited to this. The first temperature detector 20 may be provided outside the discharge passage 70. The first temperature detector 20 may be provided on the exhaust gas passage 77 or the ventilation passage 75. It is preferable that the first temperature detector 20 be provided as close to the combustion device 103 as possible in order to accurately detect the discharging of the exhaust gas from the combustion device 103.

### Operations of Power Generation System

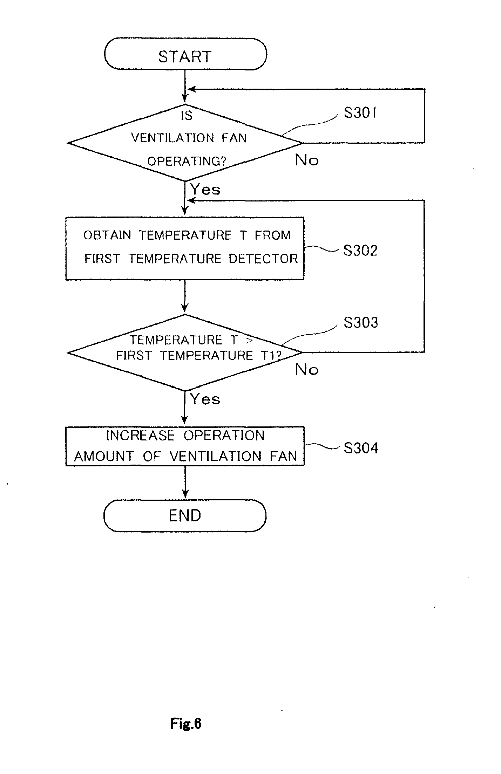

Fig. 6 is a flow chart schematically showing the exhaust gas inflow suppressing operation of the power generation system according to Embodiment 2.

As shown in Fig. 6, the controller 102 confirms whether or not the ventilation fan 13 is operating (Step S301). In a case where the ventilation fan 13 is not operating (No in Step S301), the controller 102 repeats Step S301 until the controller 102 confirms that the ventilation fan 13 is operating. In contrast, in a case where the ventilation fan 13 is operating (Yes in Step S301), the controller 102 proceeds to Step S302.

In Step S302, the controller 102 obtains a temperature T of the gas in the discharge passage 70, the temperature T being detected by the first temperature detector 20. Then, the controller 102 determines whether or not the temperature T obtained in Step S302 is higher than a first temperature T1 (Step S303). Here, the first temperature T1 may be, for example, a temperature range of the exhaust gas flowing through the discharge passage 70 from the combustion device 103, the temperature range being obtained in advance by experiments or the like. Or, the first temperature T1 may be set as, for example, a temperature that is higher than the temperature inside the building 200 or the outside temperature by 20°C or more.

In a case where the temperature T obtained in Step S302 is equal to or lower than the first temperature T1 (No in Step S303), the controller 102 returns to Step S302 and repeats Steps S302 and S303 until the temperature T becomes higher than the first temperature T1. In this case, the controller 102 may return to Step S301 and repeat Steps S301 to S303 until the controller 102 confirms that the ventilation fan 13 is operating and the temperature T is higher than the first temperature T1.

In contrast, in a case where the temperature T obtained in Step S302 is higher than the first temperature T1 (Yes in Step S303), the controller 102 proceeds to Step S304. In Step S304, the controller 102 increases the operation amount of the ventilation fan 13. At this time, in order that the exhaust gas discharged from the combustion device 103 is prevented from flowing into the case 12, it is preferable that the controller 102 control the ventilation fan 13 such that the static pressure of the ventilation fan 13 becomes higher than the ejecting pressure generated when the combustion fan 18 operates.

The power generation system 100 according to Embodiment 2 configured as above also has the same operational advantages as the power generation system 100 according to Embodiment 1. In the power generation system 100 according to Embodiment 2, whether or not the combustion device 103 is operating is determined by determining whether or not the temperature T detected by the first temperature detector 20 is higher than the first temperature T1. However, the present embodiment is not limited to this.

For example, the first temperature detector 20 is provided on the discharge passage 70 so as to be located between its upstream end located on the fuel cell system 101 side and a branch point of the discharge passage 70. In this case, when the flow rate of the exhaust gas flowing through the discharge passage 70 from the fuel cell system 101 decreases by the start of the operation of the combustion device 103, the amount of heat discharged from the case 12 to the discharge passage 70 decreases. Therefore, the temperature detected by the first temperature detector 20 may become low. Moreover, for example, when the operation of the combustion device 103 is not the combustion operation but the operation of only the combustion fan 18, the temperature detected by the first temperature detector 20 may become low.

Therefore, in a case where the temperature T detected by the first temperature detector 20 is lower than a second temperature T2, the controller 102 may determine that the combustion device 103 is operating. The second temperature T2 may be set as, for example, a temperature that is predicted based on experiments or the like and is lower than the temperature of the exhaust gas from the fuel cell 11 by 10°C or more.

Moreover, for example, in a case where the combustion device 103 operates and the flow rate of the exhaust gas flowing through the discharge passage 70 from the fuel cell system 101 decreases, the temperature detected by the first temperature detector 20 decreases as described above, and then, the amount of heat not emitted from the case 12 increases. Under the influence of the increase in the amount of heat, the detected temperature of the first temperature detector 20 may increase.

Further, for example, when the outside air temperature is low, the temperature of the exhaust gas discharged from the fuel cell system 101 to the discharge passage 70 decreases under the influence of the outside air temperature. By the operation of the combustion device 103, the flow rate of the exhaust gas flowing through the discharge passage 70 from the fuel cell system 101 decreases. Therefore, the influence of the outside air temperature on the gas flowing through the discharge passage 70 may decrease, and the detected temperature detected by the first temperature detector 20 may increase.

On this account, the controller 102 may determine that the combustion device 103 is operating, in a case where the difference between the temperatures T detected by the first temperature detector 20 before and after a predetermined time is higher than a third temperature T3 obtained in advance by experiments or the like. The third temperature T3 may be, for example, 10°C.

In a case where the flow rate of the exhaust gas from the fuel cell system 101 decreases, the amount of heat released from around the first temperature detector 20 through the discharge passage 70 to the outside air may become larger than the amount of heat transferred from the inside of the case 12 to the first temperature detector 20, depending on the configuration (diameter and length) of the pipe constituting the discharge passage 70 or the position of the first temperature detector 20. In this case, the temperature T detected by the first temperature detector 20 after a predetermined time may become lower than the temperature T detected by the first temperature detector 20 before the predetermined time.

Further, for example, when the outside air temperature is high, the temperature of the exhaust gas discharged from the fuel cell system 101 to the discharge passage 70 increases under the influence of the outside air temperature. By operating the combustion device 103, the flow rate of the exhaust gas flowing through the discharge passage 70 from the fuel cell system 101 decreases. Therefore, the influence of the outside air temperature on the gas flowing through the discharge passage 70 may decrease, and the detected temperature detected by the first temperature detector 20 may decrease.

On this account, the controller 102 may determine that the combustion device 103 is operating, in a case where the difference between the temperatures T detected by the first temperature detector 20 before and after the predetermined time is decreased by 10°C or more.

### Modification Example 1

Next, the power generation system of Modification Example 1 of the power generation system 100 according to Embodiment 2 will be explained.

The power generation system of Modification Example 1 further includes the first temperature detector provided in the case, and the controller increases the operation amount of the ventilator when the temperature detected by the first temperature detector is higher than the first temperature.

### Configuration of Power Generation System

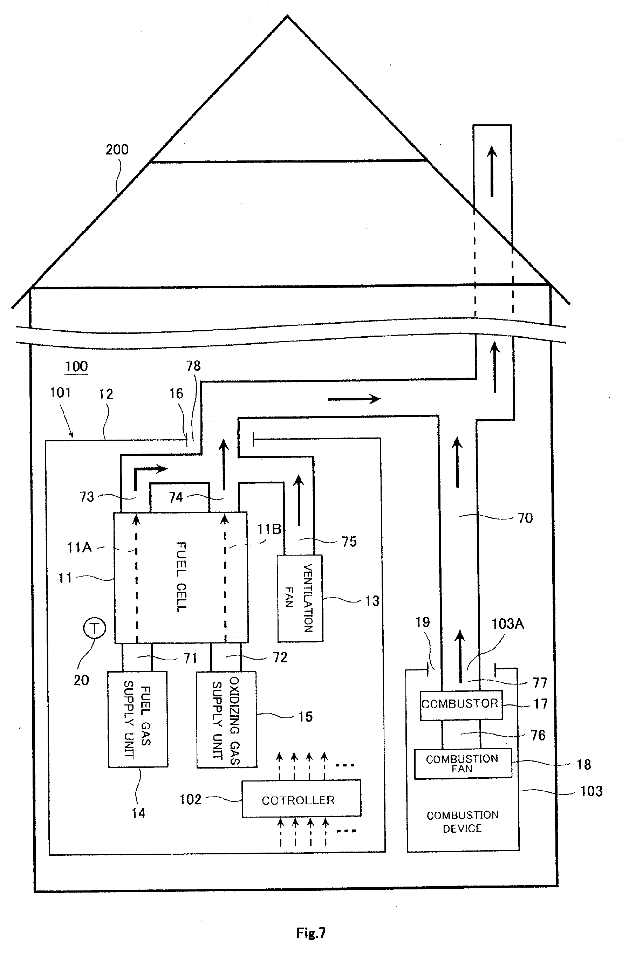

Fig. 7 is a schematic diagram showing the schematic configuration of the power generation system of Modification Example 1 of Embodiment 2.

As shown in Fig. 7, the power generation system 100 of Modification Example 1 is the same in basic configuration as the power generation system 100 according to Embodiment 2 but is different from the power generation system 100 according to Embodiment 2 in that the first temperature detector 20 is provided in the case 12. It is preferable that the first temperature detector 20 be provided at such a position that the first temperature detector 20 can detect the discharging of the exhaust gas from the combustion device 103 as quickly as possible. For example, in a case where the air flow rate of the ventilation fan 13 has decreased, the decrease in the air flow rate of the ventilation fan 13 can be detected as quickly as possible by measuring a temperature near a heat generator (for example, the fuel cell 11) in the fuel cell system.

The power generation system 100 of Modification Example 1 configured as above also has the same operational advantages as the power generation system 100 according to Embodiment 2. In the power generation system 100 of Modification Example 1, the controller 102 determines whether or not the combustion device 103 is operating, by determining whether or not the temperature T detected by the first temperature detector 20 is higher than the first temperature T1. However, the present modification example is not limited to this.

For example, the outside air temperature is high. In this case, if the combustion device 103 operates and the flow rate of the exhaust gas flowing through the discharge passage 70 from the fuel cell system 101 decreases, the flow rate of the air supplied to the case 12 decreases. In this case, since the influence of the outside air temperature on the first temperature detector 20 decreases, the temperature detected by the first temperature detector 20 may decrease. On this account, the controller 102 may determine that the combustion device 103 is operating, in a case where the temperature T detected by the first temperature detector 20 is lower than the second temperature T2. The second temperature T2 may be set as, for example, a temperature that is predicted based on experiments or the like and is lower than the temperature of the exhaust gas from the fuel cell 11 by 10°C or more.

Moreover, for example, when the combustion device 103 operates and the flow rate of the exhaust gas flowing through the discharge passage 70 from the fuel cell system 101 decreases, the flow rate of the air supplied to the case 12 decreases. In this case, as described above, since the amount of heat discharged from the case 12 to the discharge passage 70 decreases, the temperature detected by the first temperature detector 20 decreases, and then, the amount of heat not emitted from the case 12 increases. Under the influence of the increase in the amount of heat, the detected temperature of the first temperature detector 20 may increase.

Further, for example, when the outside air temperature is low, the temperature of the exhaust gas discharged from the fuel cell system 101 to the discharge passage 70 decreases under the influence of the outside air temperature. By the operation of the combustion device 103, the flow rate of the exhaust gas flowing through the discharge passage 70 from the fuel cell system 101 decreases. With this, the flow rate of the air supplied to the case 12 decreases, and the influence of the outside air temperature on the first temperature detector 20 decreases. Thus, the detected temperature detected by the first temperature detector 20 may increase.

On this account, the controller 102 may determine that the combustion device 103 is operating, in a case where the difference between the temperatures T detected by the first temperature detector 20 before and after a predetermined time is higher than a third temperature T3 obtained in advance by experiments or the like. The third temperature T3 may be, for example, 10°C.

Moreover, for example, when the outside air temperature is high, the temperature of the exhaust gas discharged from the fuel cell system 101 to the discharge passage 70 increases under the influence of the outside air temperature. By operating the combustion device 103, the flow rate of the exhaust gas flowing through the discharge passage 70 from the fuel cell system 101 decreases. With this, the flow rate of the air supplied to the case 12 decreases, and the influence of the outside air temperature on the first temperature detector 20 decreases. Thus, the detected temperature detected by the first temperature detector 20 may decrease.

On this account, the controller 102 may determine that the combustion device 103 is operating, in a case where the difference between the temperatures T detected by the first temperature detector 20 before and after the predetermined time is decreased by 10°C or more.

### Modification Example 2

Next, the power generation system of Modification Example 2 of the power generation system 100 according to Embodiment 2 will be explained.

The power generation system of Modification Example 2 further includes a first temperature detector provided in the air intake passage, and the controller increases the operation amount of the ventilator when the temperature detected by the first temperature detector is higher than the first temperature.

### Configuration of Power Generation System

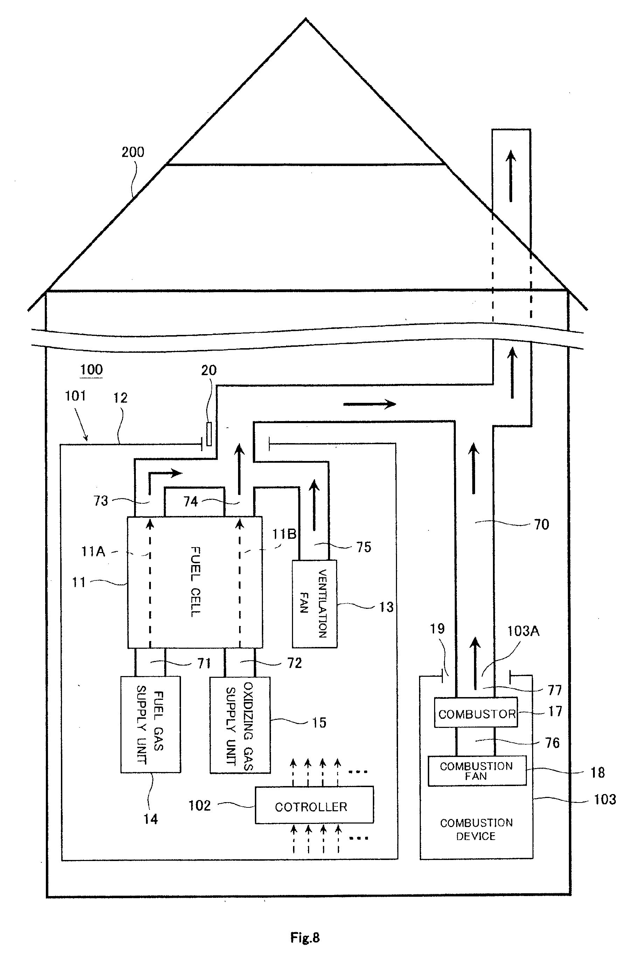

Fig. 8 is a schematic diagram showing the schematic configuration of the power generation system of Modification Example 2 of Embodiment 2.

As shown in Fig. 8, the power generation system 100 of Modification Example 2 is the same in basic configuration as the power generation system 100 according to Embodiment 2 but is different from the power generation system 100 according to Embodiment 2 in that the first temperature detector 20 is provided in the air intake passage 78. It is preferable that the first temperature detector 20 be provided at such a position that the first temperature detector 20 can detect the discharging of the exhaust gas from the combustion device 103 as quickly as possible.

The power generation system 100 of Modification Example 2 configured as above also has the same operational advantages as the power generation system 100 according to Embodiment 2. In the power generation system 100 according to Modification Example 2, whether or not the combustion device 103 is operating is determined by determining whether or not the temperature T detected by the first temperature detector 20 is higher than the first temperature T1. However, the present modification example is not limited to this.

For example, when the outside air temperature is high, the temperature of the exhaust gas discharged from the fuel cell system 101 to the discharge passage 70 increases under the influence of the outside air temperature. By the operation of the combustion device 103, the flow rate of the exhaust gas flowing through the discharge passage 70 from the fuel cell system 101 decreases. With this, the flow rate of the air supplied from the air intake passage 78 to the case 12 decreases, and the influence of the outside air temperature on the first temperature detector 20 decreases. Thus, the detected temperature detected by the first temperature detector 20 may decrease.

Therefore, the controller 102 may determine that the combustion device 103 is operating, in a case where the temperature T detected by the first temperature detector 20 is lower than the second temperature T2. The second temperature T2 may be set as, for example, a temperature that is predicted based on experiments or the like and is lower than the temperature of the exhaust gas from the fuel cell 11 by 10°C or more.

Moreover, for example, in a case where the combustion device 103 operates and the flow rate of the exhaust gas flowing through the discharge passage 70 from the fuel cell system 101 decreases, the flow rate of the air supplied from the air intake passage 78 to the case 12 decreases. In this case, as described above, since the amount of heat discharged from the case 12 to the discharge passage 70 decreases, the temperature detected by the first temperature detector 20 decreases, and then, the amount of heat not emitted from the case 12 increases. Under the influence of the increase in the amount of heat, the detected temperature of the first temperature detector 20 may increase.

Further, for example, when the outside air temperature is low, the temperature of the exhaust gas discharged from the fuel cell system 101 to the discharge passage 70 decreases under the influence of the outside air temperature. By the operation of the combustion device 103, the flow rate of the exhaust gas flowing through the discharge passage 70 from the fuel cell system 101 decreases. With this, the flow rate of the air supplied from the air intake passage 78 to the case 12 decreases, and the influence of the outside air temperature on the first temperature detector 20 decreases. Thus, the detected temperature detected by the first temperature detector 20 may increase.

On this account, the controller 102 may determine that the combustion device 103 is operating, in a case where the difference between the temperatures T detected by the first temperature detector 20 before and after a predetermined time is higher than a third temperature T3 obtained in advance by experiments or the like. The third temperature T3 may be, for example, 10°C.

Moreover, for example, when the outside air temperature is high, the temperature of the exhaust gas discharged from the fuel cell system 101 to the discharge passage 70 increases under the influence of the outside air temperature. By operating the combustion device 103, the flow rate of the exhaust gas flowing from the fuel cell system 101 to the discharge passage 70 decreases. With this, the flow rate of the air supplied from the air intake passage 78 to the case 12 decreases, and the influence of the outside air temperature on the first temperature detector 20 decreases. Thus, the detected temperature detected by the first temperature detector 20 may decrease.

On this account, the controller 102 may determine that the combustion device 103 is operating, in a case where the difference between the temperatures T detected by the first temperature detector 20 before and after the predetermined time is decreased by 10°C or more.

### Modification Example 3

Next, the power generation system of Modification Example 3 of Embodiment 2 will be explained.

The power generation system of Modification Example 3 further includes a pressure detector configured to detect the pressure in the discharge passage, and the controller increases the operation amount of the ventilator when the pressure detected by the pressure detector is higher than first pressure.

### Configuration of Power Generation System

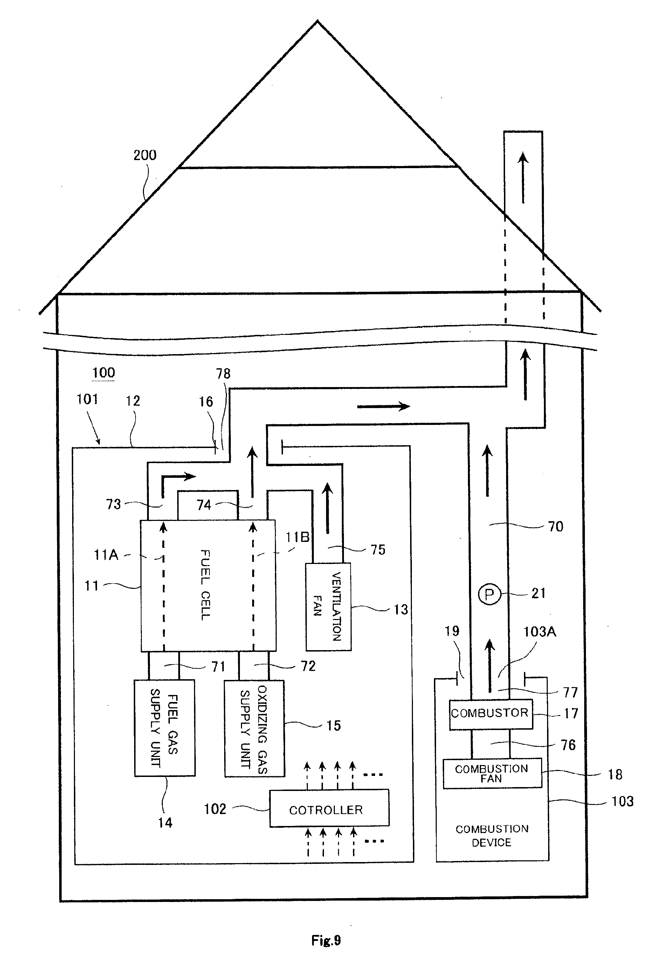

Fig. 9 is a schematic diagram showing the schematic configuration of the power generation system of Modification Example 3 of Embodiment 2.

As shown in Fig. 9, the power generation system 100 of Modification Example 3 is the same in basic configuration as the power generation system 100 according to Embodiment 2 but is different from the power generation system 100 according to Embodiment 2 in that a pressure detector 21 configured to detect the pressure of the gas in the discharge passage 70 is provided instead of the first temperature detector 20.

The pressure detector 21 may have any configuration as long as it can detect the pressure in the discharge passage 70, and a device to be used is not limited. In Modification Example 3, the pressure detector 21 is provided inside the discharge passage 70. However, the present modification example is not limited to this. The pressure detector 21 may be configured such that a sensor portion thereof is provided inside the discharge passage 70 and the other portion thereof is provided outside the discharge passage 70. Moreover, the pressure detector 21 may be provided on the exhaust gas passage 77 or the ventilation passage 75.

### Operations of Power Generation System

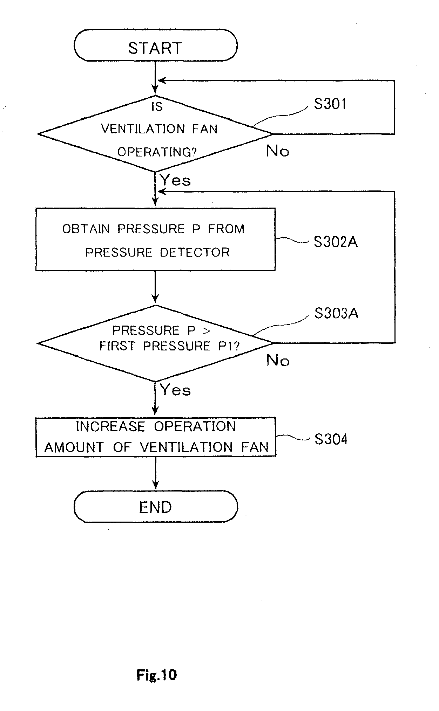

Fig. 10 is a flow chart schematically showing the exhaust gas inflow suppressing operation of the power generation system of Modification Example 3 of Embodiment 2.

As shown in Fig. 10, the exhaust gas inflow suppressing operation of the power generation system 100 of Modification Example 3 is basically the same as the exhaust gas inflow suppressing operation of the power generation system 100 according to Embodiment 2 but is different from the exhaust gas inflow suppressing operation of the power generation system 100 according to Embodiment 2 in that Steps S302A and S303A are performed instead of Steps S302 and S303 of Embodiment 2. Specifically, the controller 102 obtains pressure P in the discharge passage 70, the pressure P being detected by the pressure detector 21 (Step S302A). Next, the controller 102 determines whether or not the pressure P obtained in Step S302A is higher than first pressure P1 (Step S303A). Here, the first pressure P1 may be, for example, a pressure range of the exhaust gas flowing through the discharge passage 70 from the combustion device 103, the pressure range being obtained in advance by experiments or the like. Or, the first pressure P1 may be set as, for example, a value higher than the atmospheric pressure by certain pressure (for example, 100 Pa), that is, the sum of the atmospheric pressure and 100 Pa.

In a case where the pressure P obtained in Step S302A is equal to or lower than the first pressure P1 (No in Step S303A), the controller 102 returns to Step S302A and repeats Steps S302A and S303A until the pressure P becomes higher than the first pressure P1. In this case, the controller 102 may return to Step S301 repeat Steps S301 to S303A until the controller 102 confirms that the ventilation fan 13 is operating and the pressure P is higher than the first pressure P1.

In contrast, in a case where the pressure P obtained in Step S302A is higher than the first pressure P1 (Yes in Step S303A), the controller 102 proceeds to Step S304. In Step S304, the controller 102 increases the operation amount of the ventilation fan 13.

The power generation system 100 of Modification Example 3 configured as above also has the same operational advantages as the power generation system 100 according to Embodiment 2.

In Modification Example 3, whether or not the combustion device 103 is operating is determined by determining whether or not the pressure P detected by the pressure detector 21 is higher than the first pressure P1. However, the present modification example is not limited to this. For example, the controller 102 may determine that the combustion device 103 is operating, in a case where the difference between the pressures detected by the pressure detector 21 before and after a predetermined time is higher than a predetermined threshold pressure obtained in advance by experiments or the like.

### Modification Example 4

Next, the power generation system of Modification Example 4 of Embodiment 2 will be explained.

The power generation system of Modification Example 4 further includes a first flow rate detector configured to detect the flow rate of the gas flowing through the discharge passage, and the controller increases the operation amount of the ventilator when the flow rate detected by the first flow rate detector is higher than a first flow rate.

### Configuration of Power Generation System

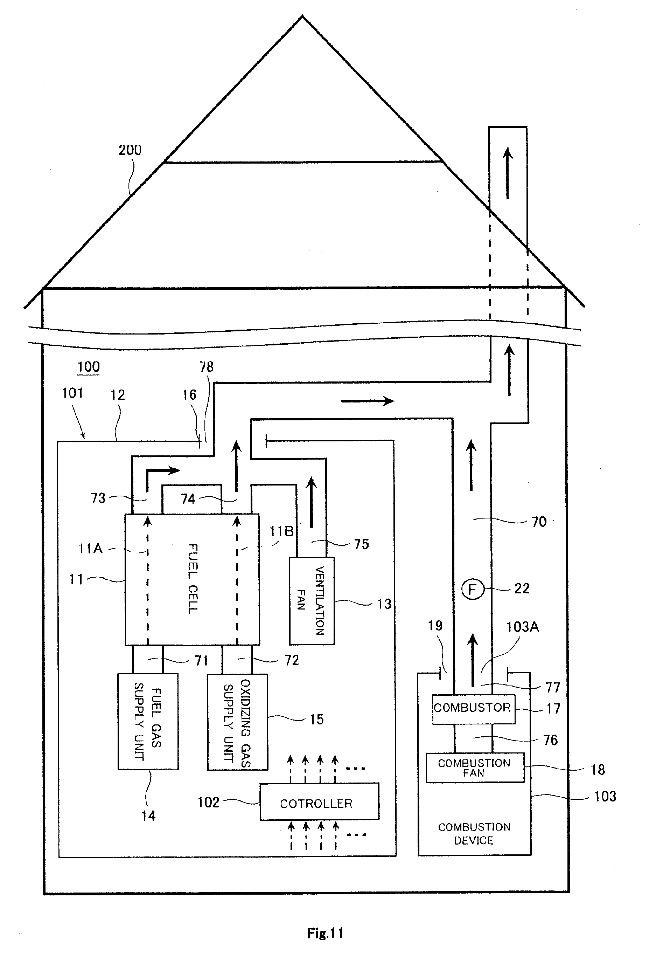

Fig. 11 is a schematic diagram showing the schematic configuration of the power generation system of Modification Example 4 of Embodiment 2.

As shown in Fig. 11, the power generation system 100 of Modification Example 4 is the same in basic configuration as the power generation system 100 according to Embodiment 2 but is different from the power generation system 100 according to Embodiment 2 in that a first flow rate detector 22 configured to detect the flow rate of the gas in the discharge passage 70 is provided instead of the first temperature detector 20.

The first flow rate detector 22 may have any configuration as long as it can detect the flow rate of the gas in the discharge passage 70, and a device to be used is not limited. In Modification Example 4, the first flow rate detector 22 is provided in the discharge passage 70. However, the present modification example is not limited to this. The first flow rate detector 22 may be configured such that a sensor portion thereof is provided inside the discharge passage 70 and the other portion thereof is provided outside the discharge passage 70. The first flow rate detector 22 may be provided on the exhaust gas passage 77 or the ventilation passage 75.

### Operations of Power Generation System

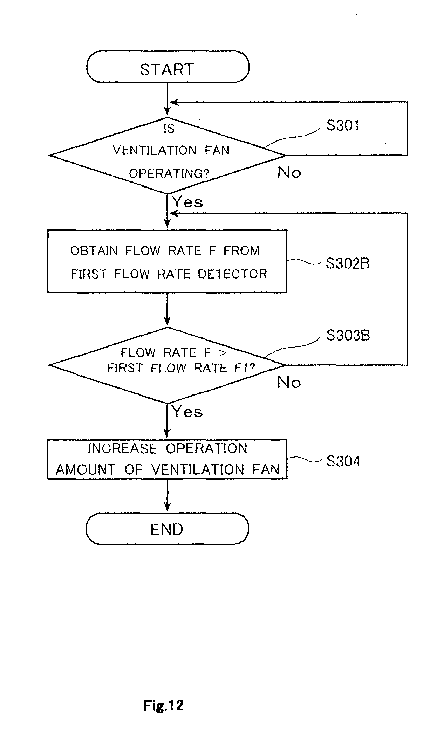

Fig. 12 is a flow chart schematically showing the exhaust gas inflow suppressing operation of the power generation system of Modification Example 4 of Embodiment 2.

As shown in Fig. 12, the exhaust gas inflow suppressing operation of the power generation system 100 of Modification Example 4 is basically the same as the exhaust gas inflow suppressing operation of the power generation system 100 according to Embodiment 2 but is different from the exhaust gas inflow suppressing operation of the power generation system 100 according to Embodiment 2 in that Steps S302B and S303B are performed instead of Steps S302 and S303 of Embodiment 2.

Specifically, the controller 102 obtains a flow rate F of the gas in the discharge passage 70, the flow rate F being detected by the first flow rate detector 22 (Step S302B). Next, the controller 102 determines whether or not the flow rate F obtained in Step S302B is higher than a first flow rate F1 (Step S303A). Here, the first flow rate F1 may be set as, for example, a flow rate range of the exhaust gas flowing through the discharge passage 70 from the combustion device 103, the flow rate range being obtained in advance by experiments or the like. For example, the first flow rate F1 may be set as 0.5 m³/min.

In a case where the flow rate F obtained in Step S302B is equal to or lower than the first flow rate F1 (No in Step S303B), the controller 102 returns to Step S302B and repeats Steps S302B and S303B until the flow rate F becomes higher than the first flow rate F1. In this case, the controller 102 may return to Step S301 and repeat Steps S301 to S303B until the controller 102 confirms that the ventilation fan 13 is operating and the flow rate F is higher than the first flow rate F1.

In contrast, in a case where the flow rate F obtained in Step S302B is higher than the first flow rate F1 (Yes in Step S303B), the controller 102 proceeds to Step S304. In Step S304, the controller 102 increases the operation amount of the ventilation fan 13.

The power generation system 100 of Modification Example 4 configured as above also has the same operational advantages as the power generation system 100 according to Embodiment 2.

In Modification Example 4, whether or not the combustion device 103 is operating is determined by determining whether or not the flow rate F detected by the first flow rate detector 22 is higher than the first flow rate F1. However, the present modification example is not limited to this. For example, the controller 102 may determine that the combustion device 103 is operating, in a case where the difference between the flow rates detected by the first flow rate detector 22 before and after a predetermined time is higher than a predetermined threshold flow rate obtained in advance by experiments or the like.

### Modification Example 5

Next, the power generation system of Modification Example 5 of Embodiment 2 will be explained.

The power generation system of Modification Example 5 further includes a second flow rate detector configured to detect the flow rate of the combustion air supplied by the combustion air supply unit, and the controller increases the operation amount of the ventilator when the flow rate detected by the second flow rate detector is higher than a second flow rate.

### Configuration of Power Generation System

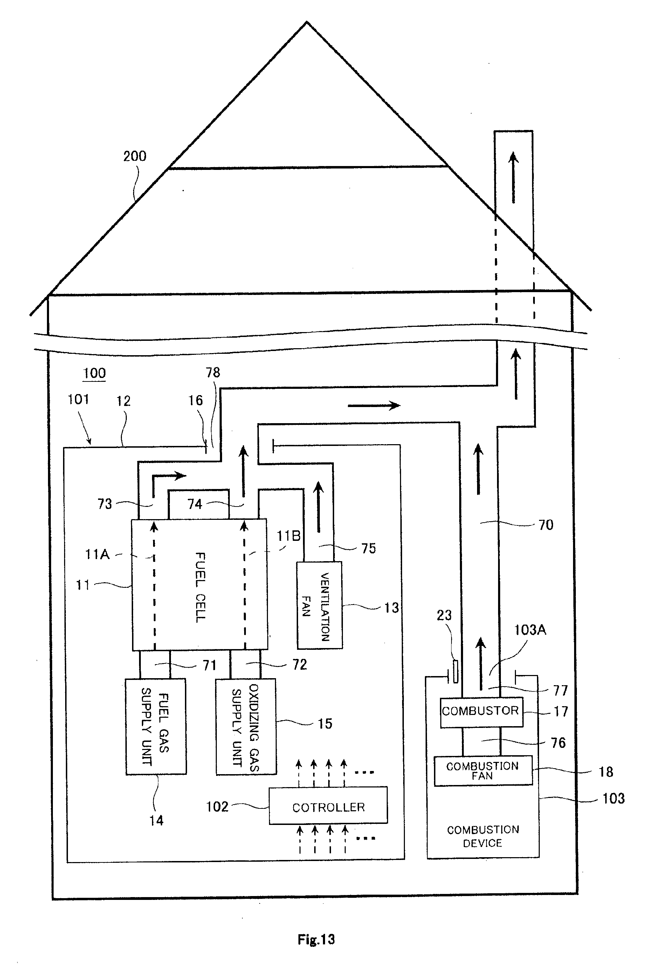

Fig. 13 is a schematic diagram showing the schematic configuration of the power generation system of Modification Example 5 of Embodiment 2.

As shown in Fig. 13, the power generation system 100 of Modification Example 5 of Embodiment 2 is the same in basic configuration as the power generation system 100 according to Embodiment 2 but is different from the power generation system 100 according to Embodiment 2 in that a second flow rate detector 23 configured to detect the flow rate of the combustion air supplied by the combustion fan 18 is provided at the air supply port 19 of the combustion device 103. The second flow rate detector 23 may have any configuration as long as it can detect that the combustion fan 18 has supplied the combustion air. The second flow rate detector 23 may be provided so as to be able to detect a part of the amount of combustion air supplied by the combustion fan 18 or may be provided so as to be able to detect the entire amount of combustion air supplied by the combustion fan 18.

The second flow rate detector 23 may have any configuration as long as it can detect the flow rate of the combustion air supplied by the combustion fan 18, and a device to be used is not limited. In Modification Example 5, the second flow rate detector 23 is provided at the air supply port 19 of the combustion device 103. However, the present modification example is not limited to this. For example, in a case where an air intake passage connecting the air supply port 19 of the combustion device 103 and an opening that is open to the atmosphere is further included, the second flow rate detector 23 may be provided on this air intake passage.

### Operations of Power Generation System

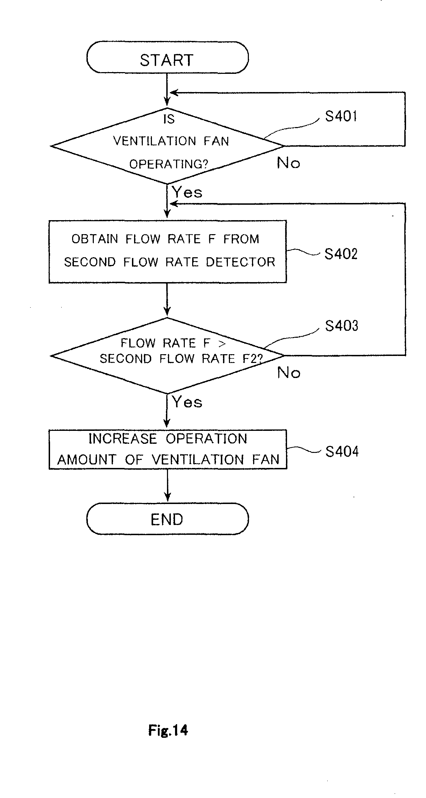

Fig. 14 is a flow chart schematically showing the exhaust gas inflow suppressing operation of the power generation system of Modification Example 5 of Embodiment 2.

As shown in Fig. 14, the controller 102 confirms whether or not the ventilation fan 13 is operating (Step S401). In a case where the ventilation fan 13 is not operating (No in Step S401), the controller 102 repeats Step S401 until the controller 102 confirms that the ventilation fan 13 is operating. In contrast, in a case where the ventilation fan 13 is operating (Yes in Step S401), the controller 102 proceeds to Step S402.

In Step S402, the controller 102 obtains the flow rate F of the combustion air of the combustion device 103, the flow rate F being detected by the second flow rate detector 23. Then, the controller 102 determines whether or not the flow rate F obtained in Step S402 is higher than a second flow rate F2 (Step S403). Here, the second flow rate F2 may be set as, for example, a flow rate range of the combustion air supplied by the combustion fan of the combustion device 103, the flow rate range being obtained in advance by experiments or the like. For example, the second flow rate F2 may be set as 10 L/min.

In a case where the flow rate F obtained in Step S402 is equal to or lower than the second flow rate F2 (No in Step S403), the controller 102 returns to Step S402 and repeats Steps S402 and S403 until the flow rate F becomes higher than the second flow rate F2. In this case, the controller 102 may return to Step S401 and repeat Steps S401 to S403 until the controller 102 confirms that the ventilation fan 13 is operating and the flow rate F is higher than the second flow rate F2.

In contrast, in a case where the flow rate F obtained in Step S402 is higher than the second flow rate F2 (Yes in Step S403), the controller 102 proceeds to Step S404. In Step S404, the controller 102 increases the operation amount of the ventilation fan 13. At this time, in order that the exhaust gas discharged from the combustion device 103 is prevented from flowing into the case 12, it is preferable that the controller 102 control the ventilation fan 13 such that the static pressure of the ventilation fan 13 becomes higher than the ejecting pressure generated when the combustion fan 18 operates.

The power generation system 100 of Modification Example 5 configured as above also has the same operational advantages as the power generation system 100 according to Embodiment 2.

In the power generation system 100 of Modification Example 5, whether or not the combustion device 103 is operating is determined by determining whether or not the flow rate F detected by the second flow rate detector 23 is higher than the second flow rate F2. However, the present modification example is not limited to this. For example, the controller 102 may determine that the combustion device 103 is operating, in a case where the difference between the flow rates F detected by the second flow rate detector 23 before and after a predetermined time is higher than a predetermined threshold flow rate obtained in advance by experiments or the like.

### Embodiment 3

The power generation system according to Embodiment 3 of the present invention is configured such that the air intake passage is formed so as to: cause the case and the air supply port of the combustion device to communicate with each other; supply air to the fuel cell system and the combustion device from an opening of the air intake passage, the opening being open to the atmosphere; and be heat-exchangeable with the exhaust passage.

Here, the expression "the air intake passage is formed so as to be heat-exchangeable with the discharge passage" denotes that the air intake passage and the discharge passage do not have to contact each other and may be spaced apart from each other to a level that the gas in the air intake passage and the gas in the exhaust passage are heat-exchangeable with each other. Therefore, the air intake passage and the discharge passage may be formed with a space therebetween. Or, one of the air intake passage and the discharge passage may be formed inside the other. To be specific, a pipe constituting the air intake passage and a pipe constituting the exhaust passage may be formed as a double pipe.

### Configuration of Power Generation System

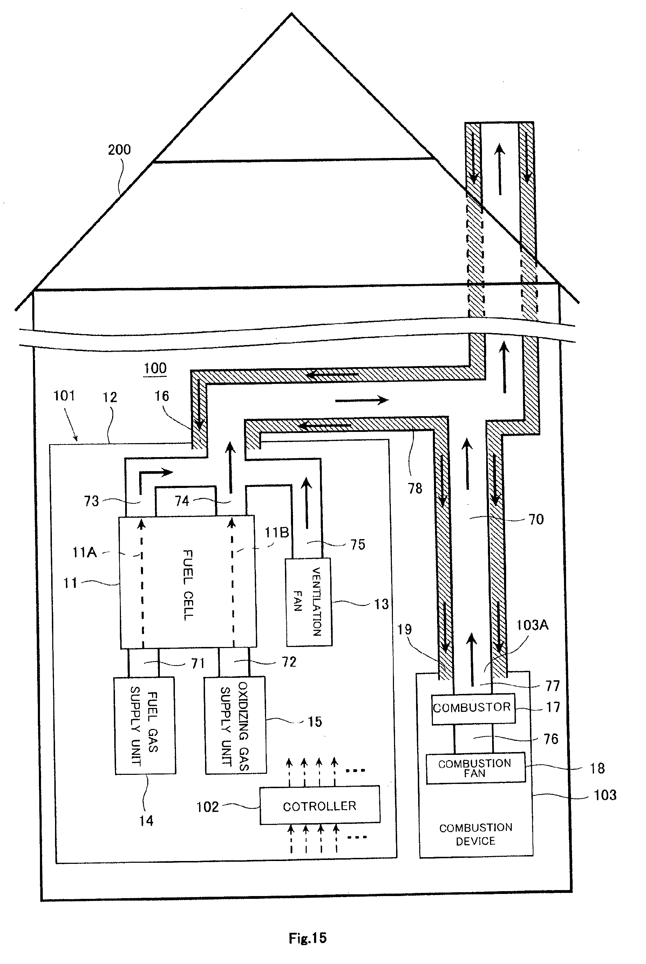

Fig. 15 is a schematic diagram showing the schematic configuration of the power generation system according to Embodiment 3 of the present invention. In Fig. 15, the air intake passage is shown by hatching.

As shown in Fig. 15, the power generation system 100 of Embodiment 3 of the present invention is the same in basic configuration as the power generation system 100 according to Embodiment 1 but is different from the power generation system 100 according to Embodiment 1 in that the power generation system 100 of Embodiment 3 includes the air intake passage 78 configured to cause the case 12 and the air supply port of the combustion device 103 to communicate with each other, supply air to the fuel cell system 101 and the combustion device 103 from an opening of the air intake passage 78, the opening being open to the atmosphere, and be heat-exchangeable with the discharge passage 70.

The air intake passage 78 is formed so as to: cause the combustion device 103 and the case 12 of the fuel cell system 101 to communicate with each other; supply air to the combustion device 103 and the fuel cell system 101 from the outside (herein, the outside of the building 200); and surround an outer periphery of the discharge passage 70.

More specifically, the air intake passage 78 branches, and two upstream ends thereof are respectively connected to the hole 16 and the hole 19. The air intake passage 78 is formed to extend up to the outside of the building 200, and a downstream end (opening) thereof is open to the atmosphere. With this, the air intake passage 78 causes the case 12 and the combustion device 103 to communicate with each other, and the air can be supplied from the outside of the power generation system 100 to the fuel cell system 101 and the combustion device 103.

The air intake passage 78 and the discharge passage 70 are constituted by a so-called double pipe.

The power generation system 100 according to Embodiment 3 configured as above also has the same operational advantages as the power generation system 100 according to Embodiment 1.

### Embodiment 4

The power generation system according to Embodiment 4 of the present invention further includes a second temperature detector provided on the air intake passage, and the controller increases the operation amount of the ventilator when the temperature detected by the second temperature detector is higher than a fourth temperature.

Here, the expression "the air intake passage is formed so as to be heat-exchangeable with the discharge passage" denotes that the air intake passage and the discharge passage do not have to contact each other and may be spaced apart from each other to a level that the gas in the air intake passage and the gas in the exhaust passage are heat-exchangeable with each other. Therefore, the air intake passage and the discharge passage may be formed with a space therebetween. Or, one of the air intake passage and the discharge passage may be formed inside the other. To be specific, a pipe constituting the air intake passage and a pipe constituting the exhaust passage may be formed as a double pipe.

### Configuration of Power Generation System

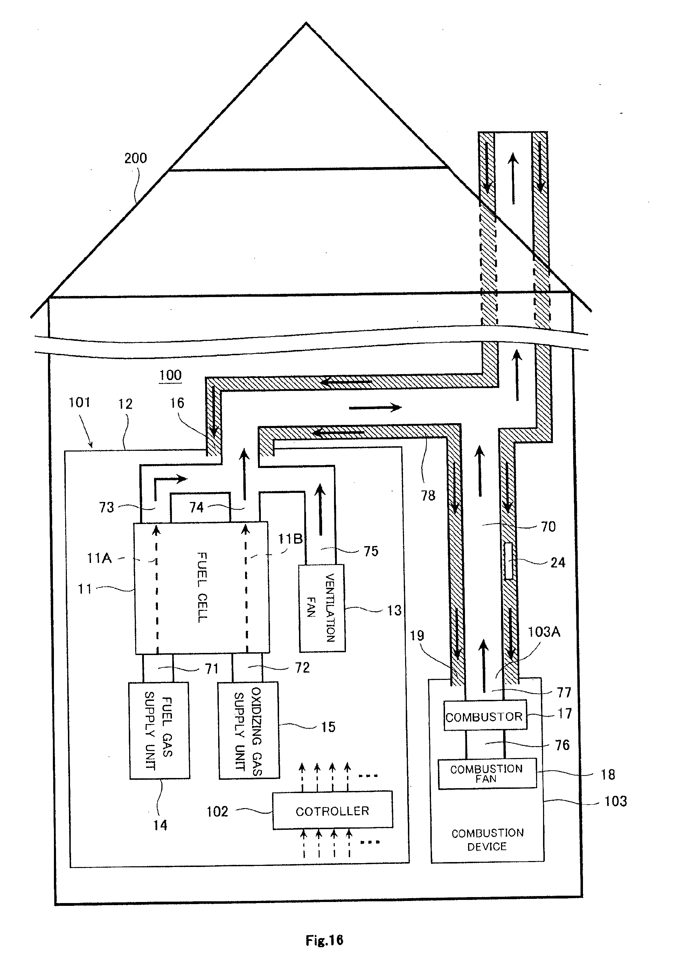

Fig. 16 is a schematic diagram showing the schematic configuration of the power generation system according to Embodiment 4. In Fig. 16, the air intake passage is shown by hatching.

As shown in Fig. 16, the power generation system 100 according to Embodiment 4 is the same in basic configuration as the power generation system 100 according to Embodiment 3 but is different from the power generation system 100 according to Embodiment 3 in that a second temperature detector 24 is provided on the air intake passage 78.

Specifically, the second temperature detector 24 may have any configuration as long as it can detect the temperature of the gas in the air intake passage 78. Examples of the second temperature detector 24 are a thermocouple and an infrared sensor. In Embodiment 5, the second temperature detector 24 is provided inside the air intake passage 78. However, the present embodiment is not limited to this. The second temperature detector 24 may be provided outside the air intake passage 78. It is preferable that the second temperature detector 24 be provided as close to the combustion device 103 as possible in order to accurately detect the discharging of the exhaust gas from the combustion device 103.

The air intake passage 78 is formed so as to: cause the combustion device 103 and the case 12 of the fuel cell system 101 to communicate with each other; supply air to the combustion device 103 and the fuel cell system 101 from the outside (herein, the outside of the building 200); and surround the outer periphery of the discharge passage 70.

More specifically, the air intake passage 78 branches, and two upstream ends thereof are respectively connected to the hole 16 and the hole 19. The air intake passage 78 is formed to extend up to the outside of the building 200, and the downstream end (opening) thereof is open to the atmosphere. With this, the air intake passage 78 causes the case 12 and the combustion device 103 to communicate with each other, and the air can be supplied from the outside of the power generation system 100 to the fuel cell system 101 and the combustion device 103.

The air intake passage 78 and the discharge passage 70 are constituted by a so-called double pipe. With this, when the flue gas (exhaust gas) is discharged from the combustion device 103 to the discharge passage 70, the gas in the air intake passage 78 is heated by the heat transfer from the flue gas. Therefore, whether or not the exhaust gas is discharged from the combustion device 103 to the discharge passage 70 can be determined based on the temperature detected by the second temperature detector 24.

### Operations of Power Generation System

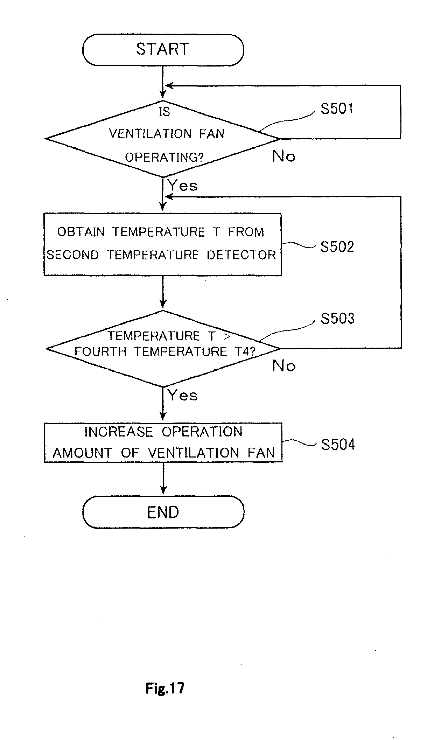

Fig. 17 is a flow chart schematically showing the exhaust gas inflow suppressing operation of the power generation system according to Embodiment 4.

As shown in Fig. 17, the controller 102 confirms whether or not the ventilation fan 13 is operating (Step S501). In a case where the ventilation fan 13 is not operating (No in Step S501), the controller 102 repeats Step S501 until the controller 102 confirms that the ventilation fan 13 is operating. In contrast, in a case where the ventilation fan 13 is operating (Yes in Step S501), the controller 102 proceeds to Step S502.

In Step S502, the controller 102 obtains the temperature T of the supply gas of the combustion device 103, the temperature T being detected by the second temperature detector 24. Then, the controller 102 determines whether or not the temperature T obtained in Step S502 is higher than a fourth temperature T4 (Step S503). Here, the fourth temperature T4 may be, for example, a temperature range in the air intake passage 78 when the exhaust gas discharged from the combustion device 103 flows through the discharge passage 70, the temperature range being obtained in advance by experiments or the like. The third temperature T3 may be set as, for example, a temperature that is higher than the temperature inside the building 200 or the outside temperature by 20°C or more.

In a case where the temperature T obtained in Step S502 is equal to or lower than the fourth temperature T4 (No in Step S503), the controller 102 returns to Step S502 and repeats Steps S502 and S503 until the temperature T becomes higher than the third temperature T3. In this case, the controller 102 may return to Step S501 and repeat Steps S501 to S503 until the controller 102 confirms that the ventilation fan 13 is operating and the temperature T is higher than the third temperature T3.

In contrast, in a case where the temperature T obtained in Step S502 is higher than the fourth temperature T4 (Yes in Step S503), the controller 102 proceeds to Step S504. In Step S504, the controller 102 increases the operation amount of the ventilation fan 13. At this time, in order that the exhaust gas discharged from the combustion device 103 is prevented from flowing into the case 12, it is preferable that the controller 102 control the ventilation fan 13 such that the static pressure of the ventilation fan 13 becomes higher than the ejecting pressure generated when the combustion fan 18 operates.

The power generation system 100 according to Embodiment 4 configured as above also has the same operational advantages as the power generation system 100 according to Embodiment 3.

In Embodiment 4, whether or not the combustion device 103 is operating is determined by determining whether or not the temperature T detected by the second temperature detector 24 is higher than the fourth temperature T4. However, the present embodiment is not limited to this. For example, the controller 102 may determine that the combustion device 103 is operating, in a case where the difference between the temperatures T detected by the second temperature detector 24 before and after a predetermined time is higher than a predetermined threshold temperature obtained in advance by experiments or the like.

### Embodiment 5

The power generation system according to Embodiment 5 of the present invention is configured such that the fuel cell system further includes a hydrogen generator including a reformer configured to generate a hydrogen-containing gas from a raw material and steam.

### Configuration of Power Generation System

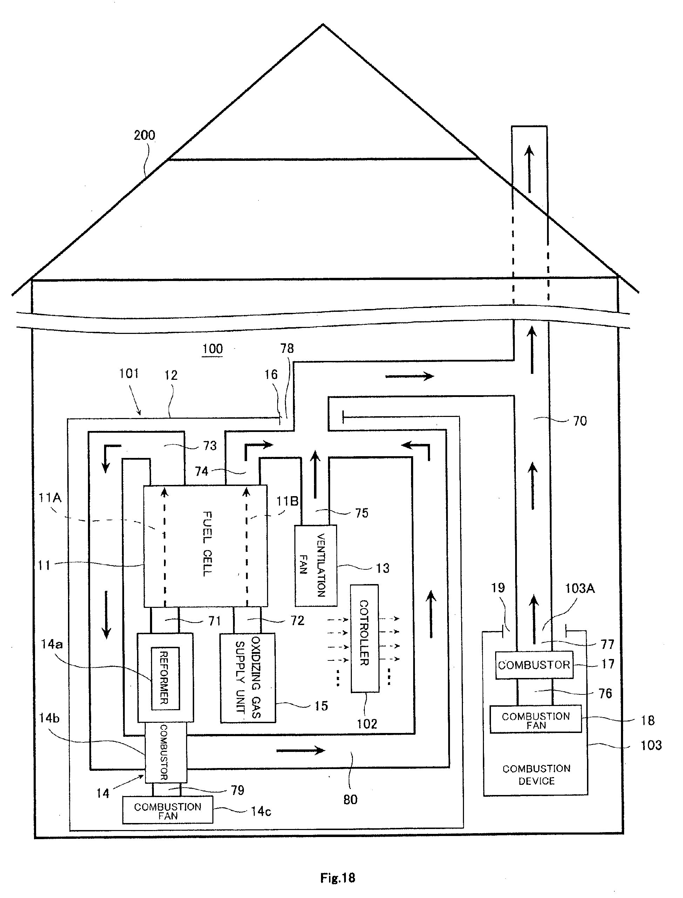

Fig. 18 is a schematic diagram showing the schematic configuration of the power generation system according to Embodiment 5 of the present invention.

As shown in Fig. 18, the power generation system 100 according to Embodiment 5 of the present invention is the same in basic configuration as the power generation system 100 according to Embodiment 1 but is different from the power generation system 100 according to Embodiment 1 in that: the fuel gas supply unit 14 is constituted by a hydrogen generator 14; and the off fuel gas passage 73 is connected to the combustor 14b of the hydrogen generator 14. Specifically, the hydrogen generator 14 includes the reformer 14a and the combustor 14b.

The downstream end of the off fuel gas passage 73 is connected to the combustor 14b. The off fuel gas flows from the fuel cell 11 through the off fuel gas passage 73 to be supplied to the combustor 14b as the combustion fuel. A combustion fan 14c is connected to the combustor 14b through an air supply passage 79. The combustion fan 14c may have any configuration as long as it can supply the combustion air to the combustor 14b. For example, the combustion fan 14c may be constituted by a fan, a blower, or the like.

In the power generation system 100 according to Embodiment 5, the supply of the combustion air to the combustor is realized by the combustion fan. However, the oxidizing gas supply unit may be used. Or, the power generation system 100 according to Embodiment 5 may be configured such that: a passage connecting the oxidizing gas supply passage and the combustor is formed; and the oxidizing gas (oxygen) supplied from the oxidizing gas supply unit is supplied to the combustor and the fuel cell.

The combustor 14b combusts the supplied off fuel gas and combustion air to generate the flue gas and heat. The flue gas generated in the combustor 14b heats the reformer 14a and the like, and then, is discharged to a flue gas passage 80. The flue gas discharged to the flue gas passage 80 flows through the flue gas passage 80 to be discharged to the discharge passage 70. The flue gas discharged to the discharge passage 70 flows through the discharge passage 70 to be discharged to the outside of the power generation system 100 (the building 200).

A raw material supply unit and a steam supply unit (both not shown) are connected to the reformer 14a, and the raw material and the steam are supplied to the reformer 14a. Examples of the raw material are a natural gas containing methane as a major component and a LP gas.

The reformer 14a includes a reforming catalyst. The reforming catalyst may be any material as long as, for example, it can serve as a catalyst in a steam-reforming reaction by which the hydrogen-containing gas is generated from the raw material and the steam. Examples of the reforming catalyst are a ruthenium-based catalyst in which a catalyst carrier, such as alumina, supports ruthenium (Ru) and a nickel-based catalyst in which the same catalyst carrier as above supports nickel (Ni).

In the reformer 14a, the hydrogen-containing gas is generated by the reforming reaction between the supplied raw material and steam. The generated hydrogen-containing gas flows as the fuel gas through the fuel gas supply passage 71 to be supplied to the fuel gas channel 11A of the fuel cell 11.

Embodiment 5 is configured such that the hydrogen-containing gas generated in the reformer 14a is supplied as the fuel gas to the fuel cell 11. However, the present embodiment is not limited to this. Embodiment 5 may be configured such that the hydrogen-containing gas flowed through a shift converter or carbon monoxide remover provided in the hydrogen generator 14 is supplied to the fuel cell 11, the shift converter including a shift catalyst (such as a copper-zinc-based catalyst) for reducing carbon monoxide in the hydrogen-containing gas supplied from the reformer 14a, the carbon monoxide remover including an oxidation catalyst (such as a ruthenium-based catalyst) or a methanation catalyst (such as a ruthenium-based catalyst).

The power generation system 100 according to Embodiment 5 configured as above also has the same operational advantages as the power generation system 100 according to Embodiment 1.

In Embodiments 1 to 5 (including Modification Examples), the ventilation fan 13 is used as a ventilator. However, these embodiments are not limited to this. For example, the oxidizing gas supply unit 15 may be used instead of the ventilation fan 13. The controller 102 may increase the operation amount of the oxidizing gas supply unit 15 to increase the operation amount. Or, the power generation system may be configured such that: a passage resistance adjusting unit capable of adjusting the passage resistance is provided on a passage through which the supply air of the oxidizing gas supply unit 15 flows or a passage through which the ejection air of the oxidizing gas supply unit 15 flows; and the controller 102 controls the passage resistance adjusting unit to increase the operation amount of the oxidizing gas supply unit 15. A solenoid valve capable of adjusting an opening degree may be used as the passage resistance adjusting unit. Or, the oxidizing gas supply unit 15 may be configured to have a passage resistance adjusting function.

Moreover, for example, a passage (hereinafter referred to as a "first connection passage") connecting one of the oxidizing gas supply unit 15 and the oxidizing gas supply passage 72 and one of the off oxidizing gas passage 74 and the discharge passage 70 may be formed, and the controller 102 may increase the flow rate of the oxidizing gas flowing through the first connection passage in a case where the combustion device 103 is activated when the oxidizing gas supply unit 15 is operating.

Here, in a case where an upstream end of the first connection passage is connected to the oxidizing gas supply passage 72, a flow rate adjuster may be provided on the first connection passage, and the controller 102 may control the oxidizing gas supply unit 15 and the flow rate adjuster to increase the flow rate of the oxidizing gas flowing through the first connection passage.

In a case where the fuel gas supply unit 14 is constituted by a hydrogen generator, and the hydrogen generator includes the combustor 14b and the combustion fan 14c, the combustion fan 14c may be used as a ventilator instead of the ventilation fan 13, and the controller 102 may increase the operation amount of the combustion fan 14c in a case where the combustion device 103 is activated when the fuel gas supply unit 14 is operating.

A passage resistance adjusting unit capable of adjusting the passage resistance may be provided on a passage through which the supply air of the combustion fan 14c flows or a passage through which the ejection air of the combustion fan 14c flows, and the controller 102 may control the passage resistance adjusting unit to increase the operation amount of the combustion fan 14c. A solenoid valve capable of adjusting an opening degree may be used as the passage resistance adjusting unit.

The combustion fan 14c may be configured to have a passage resistance adjusting function. A passage (hereinafter referred to as a "second connection passage") connecting one of the combustion fan 14c and the air supply passage 79 and one of the flue gas passage 80 and the discharge passage 70 may be formed, and the controller 102 may increase the flow rate of the air flowing through the second connection passage in a case where the combustion device is 103 is activated when the combustion fan 14c is operating.

Here, in a case where an upstream end of the second connection passage is connected to the air supply passage 79, a flow rate adjuster may be provided on the second connection passage, and the controller 102 may control the combustion fan 14c and the flow rate adjuster to increase the flow rate of the air flowing through the second connection passage.

Further, as a ventilator, the ventilation fan 13 and the oxidizing gas supply unit 15 may be used at the same time, the ventilation fan 13 and the combustion fan 14c may be used at the same time, the combustion fan 14c and the oxidizing gas supply unit 15 may be used at the same time, or the ventilation fan 13, the combustion fan 14c, and the oxidizing gas supply unit 15 may be used at the same time.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention. In addition, various inventions can be made by suitable combinations of a plurality of components disclosed in the above embodiments.

### Industrial Applicability

According to the power generation system of the present invention and the method of operating the power generation system, the power generation of the fuel cell can be stably performed, and the durability of the power generation system can be improved. Therefore, the power generation system of the present invention and the method of operating the power generation system are useful in the field of fuel cells.

### Reference Signs List

- 11: fuel cell
- 11A: fuel gas channel
- 11B: oxidizing gas channel
- 12: case
- 13: ventilation fan
- 14: fuel gas supply unit
- 14a: reformer
- 14b: combustor
- 14c: combustion fan
- 15: oxidizing gas supply unit
- 16: air supply port
- 17: combustor
- 18: combustion fan
- 19: air supply port
- 20: first temperature detector
- 21: pressure detector
- 22: first flow rate detector
- 23: second flow rate detector
- 24: second temperature detector
- 70: discharge passage
- 71: fuel gas supply passage
- 72: oxidizing gas supply passage
- 73: off fuel gas passage
- 74: off oxidizing gas passage
- 75: ventilation passage
- 76: combustion air supply passage
- 77: exhaust gas passage
- 78: air intake passage
- 79: air supply passage
- 80: flue gas passage
- 100: power generation system
- 101: fuel cell system
- 102: controller
- 103: combustion device
- 103A: exhaust port
- 200: building

## Claims

1. A power generation system comprising:
a fuel cell system including a fuel cell configured to generate electric power using a fuel gas and an oxidizing gas, a case configured to house the fuel cell, and a ventilator;
a controller;
a combustion device including a combustion air supply unit configured to supply combustion air;
an air intake passage configured to supply air to the case; and
a discharge passage formed to connect the case and an exhaust port of the combustion device and configured to discharge an exhaust gas from the fuel cell system and an exhaust gas from the combustion device to an atmosphere through an opening of the discharge passage, the opening being open to the atmosphere, wherein:
the ventilator is configured to discharge a gas in the case to the discharge passage to ventilate an inside of the case; and
in a case where the controller determines that the combustion device has operated when the ventilator is operating, the controller increases an operation amount of the ventilator.

2. The power generation system according to claim 1, wherein in a case where an activation command of the combustion device is input, the controller increases the operation amount of the ventilator.

3. The power generation system according to claim 1, wherein in a case where at least one of discharging of the exhaust gas of the combustion device and supply of the combustion air of the combustion device is detected when the ventilator is operating, the controller increases the operation amount of the ventilator.

4. The power generation system according to any one of claims 1 to 3, further comprising:
the air intake passage formed at an air supply port of the case and configured to supply air to the fuel cell system from an opening of the air intake passage, the opening being open to the atmosphere; and
a first temperature detector provided at least one of on the air intake passage, on the discharge passage, and in the case, wherein
in a case where a temperature detected by the first temperature detector is higher than a first temperature, the controller increases the operation amount of the ventilator.

5. The power generation system according to any one of claims 1 to 3, further comprising:
the air intake passage formed at an air supply port of the case and configured to supply air to the fuel cell system from an opening of the air intake passage, the opening being open to the atmosphere; and
a first temperature detector provided at least one of on the air intake passage, on the discharge passage, and in the case, wherein
in a case where a temperature detected by the first temperature detector is lower than a second temperature, the controller increases the operation amount of the ventilator.

6. The power generation system according to any one of claims 1 to 3, further comprising:
the air intake passage formed at an air supply port of the case and configured to supply air to the fuel cell system from an opening of the air intake passage, the opening being open to the atmosphere; and
a first temperature detector provided at least one of on the air intake passage, on the discharge passage, and in the case, wherein
in a case where a difference between temperatures detected by the first temperature detector before and after a predetermined time is higher than a third temperature, the controller increases the operation amount of the ventilator.

7. The power generation system according to any one of claims 1 to 3, further comprising
a pressure detector configured to detect pressure in the discharge passage, wherein
in a case where the pressure detected by the pressure detector is higher than first pressure, the controller increases the operation amount of the ventilator.

8. The power generation system according to any one of claims 1 to 3, further comprising
a first flow rate detector configured to detect a flow rate of a gas flowing through the discharge passage, wherein
in a case where the flow rate detected by the first flow rate detector is higher than a first flow rate, the controller increases the operation amount of the ventilator.

9. The power generation system according to any one of claims 1 to 3, further comprising
a second flow rate detector configured to detect a flow rate of the combustion air supplied by the combustion air supply unit, wherein
in a case where the flow rate detected by the second flow rate detector is higher than a second flow rate, the controller increases the operation amount of the ventilator.

10. The power generation system according to any one of claims 1 to 9, wherein the air intake passage is formed so as to: cause the case and the air supply port of the combustion device to communicate with each other; supply the air to the fuel cell system and the combustion device from the opening of the air intake passage, the opening being open to the atmosphere; and be heat-exchangeable with the exhaust passage.

11. The power generation system according to claim 10, further comprising
a second temperature detector provided on the air intake passage, wherein
in a case where a temperature detected by the second temperature detector is higher than a fourth temperature, the controller increases the operation amount of the ventilator.

12. The power generation system according to any one of claims 1 to 11, wherein the fuel cell system further includes a hydrogen generator including a reformer configured to generate a hydrogen-containing gas from a raw material and steam.

13. A method of operating a power generation system,
the power generation system comprising:
a fuel cell system including a fuel cell configured to generate electric power using a fuel gas and an oxidizing gas, a case configured to house the fuel cell, and a ventilator;
a combustion device including a combustion air supply unit configured to supply combustion air; and
a discharge passage formed to cause the case and an exhaust port of the combustion device to communicate with each other and configured to discharge an exhaust gas from the fuel cell system and an exhaust gas from the combustion device to an atmosphere through an opening of the discharge passage, the opening being open to the atmosphere, wherein:
the ventilator is configured to discharge a gas in the case to the discharge passage to ventilate an inside of the case; and
in a case where the combustion device is activated when the ventilator is operating, an operation amount of the ventilator is increased.

## Patentansprüche

1. Energieerzeugungssystem, das umfasst:
ein Brennstoffzellensystem, das eine Brennstoffzelle, die so eingerichtet ist, dass sie Elektroenergie unter Verwendung eines Brennstoffgases und eines oxidierenden Gases erzeugt, ein Gehäuse, das so eingerichtet ist, dass es die Brennstoffzelle aufnimmt, und ein Gebläse enthält;
eine Steuereinrichtung;
eine Verbrennungsvorrichtung, die eine Verbrennungsluft-Zuführeinheit enthält, die so eingerichtet ist, dass sie Verbrennungsluft zuführt;
einen Luftansaugkanal, der so eingerichtet ist, dass er dem Gehäuse Luft zuführt; und
einen Ableitkanal, der so ausgebildet ist, dass er das Gehäuse und einen Abgasanschluss der Verbrennungsvorrichtung verbindet, und so eingerichtet ist, dass er ein Abgas von dem Brennstoffzellensystem und ein Abgas von der Verbrennungsvorrichtung über eine Öffnung des Ableitkanals an eine Atmosphäre ableitet, wobei die Öffnung zu der Atmosphäre hin offen ist, und
das Gebläse so eingerichtet ist, dass es ein Gas in dem Gehäuse zu dem Ableitkanal ableitet, um einen Innenraum des Gehäuses zu belüften; und
wenn die Steuereinrichtung feststellt, dass die Verbrennungsvorrichtung gearbeitet hat, wenn das Gebläse arbeitet, die Steuereinrichtung das Gebläse in einem stärkeren Maß arbeiten lässt.

2. Energieerzeugungssystem nach Anspruch 1, wobei, wenn ein Befehl zum Aktivieren der Verbrennungsvorrichtung eingegeben wird, die Steuereinrichtung das Gebläse in stärkerem Maß arbeiten lässt.

3. Energieerzeugungssystem nach Anspruch 1, wobei, wenn Ableitung des Abgases der Verbrennungsvorrichtung oder/und Zufuhr der Verbrennungsluft der Verbrennungsvorrichtung erfasst wird, wenn das Gebläse arbeitet, die Steuereinrichtung das Gebläse in stärkerem Maß arbeiten lässt.

4. Energieerzeugungssystem nach einem der Ansprüche 1 bis 3, das des Weiteren umfasst:
den Luftansaugkanal, der an einem Luftzuführanschluss des Gehäuses ausgebildet und so eingerichtet ist, dass er dem Brennstoffsystem über eine Öffnung des Luftansaugkanals Luft zuführt, wobei die Öffnung zu der Atmosphäre hin offen ist; und
eine erste Temperatur-Erfassungseinrichtung, die an dem Luftansaugkanal, an dem Ableitkanal oder/und in dem Gehäuse vorhanden ist, wobei
wenn eine durch die erste Temperatur-Erfassungseinrichtung erfasste Temperatur höher ist als eine erste Temperatur, die Steuereinrichtung das Gebläse in stärkerem Maß arbeiten lässt.

5. Energieerzeugungssystem nach einem der Ansprüche 1 bis 3, das des Weiteren umfasst:
den Luftansaugkanal, der an einem Luftzuführanschluss des Gehäuses ausgebildet und so eingerichtet ist, dass er dem Brennstoffsystem über eine Öffnung des Luftansaugkanals Luft zuführt, wobei die Öffnung zu der Atmosphäre hin offen ist; und
eine erste Temperatur-Erfassungseinrichtung, die an dem Luftansaugkanal, an dem Ableitkanal oder/und in dem Gehäuse vorhanden ist, wobei
wenn eine durch die erste Temperatur-Erfassungseinrichtung erfasste Temperatur niedriger ist als eine erste Temperatur, die Steuereinrichtung das Gebläse in stärkerem Maß arbeiten lässt.

6. Energieerzeugungssystem nach einem der Ansprüche 1 bis 3, das des Weiteren umfasst:
den Luftansaugkanal, der an einem Luftzuführanschluss des Gehäuses ausgebildet und so eingerichtet ist, dass er dem Brennstoffsystem über eine Öffnung des Luftansaugkanals Luft zuführt, wobei die Öffnung zu der Atmosphäre hin offen ist; und
eine erste Temperatur-Erfassungseinrichtung, die an dem Luftansaugkanal, an dem Ableitkanal oder/und in dem Gehäuse vorhanden ist, wobei
wenn eine Differenz zwischen Temperaturen, die durch die erste Temperatur-Erfassungseinrichtung vor und nach einer vorgegebenen Zeit erfasst werden, höher ist als eine dritte Temperatur, die Steuereinrichtung das Gebläse in stärkerem Maß arbeiten lässt.

7. Energieerzeugungssystem nach einem der Ansprüche 1 bis 3, das des Weiteren umfasst:
eine Druck-Erfassungseinrichtung, die so eingerichtet ist, dass sie Druck in dem Ableitkanal erfasst, wobei
wenn der durch die Druck-Erfassungseinrichtung erfasste Druck höher ist als ein erster Druck, die Steuereinrichtung das Gebläse in stärkerem Maß arbeiten lässt.

8. Energieerzeugungssystem nach einem der Ansprüche 1 bis 3, das des Weiteren umfasst:
eine erste Strömungsgeschwindigkeits-Erfassungseinrichtung, die so eingerichtet ist, dass sie eine Strömungsgeschwindigkeit eines durch den Ableitkanal strömenden Gases erfasst, wobei
wenn die durch die erste Strömungsgeschwindigkeits-Erfassungseinrichtung erfasste Strömungsgeschwindigkeit höher ist als eine erste Strömungsgeschwindigkeit, die Steuereinrichtung das Gebläse in stärkerem Maß arbeiten lässt.

9. Energieerzeugungssystem nach einem der Ansprüche 1 bis 3, das des Weiteren umfasst:
eine zweite Strömungsgeschwindigkeits-Erfassungseinrichtung, die so eingerichtet ist, dass sie eine Strömungsgeschwindigkeit der von der Verbrennungsluft-Zuführeinheit zugeführten Verbrennungsluft erfasst, wobei
wenn die durch die zweite Strömungsgeschwindigkeits-Erfassungseinrichtung erfasste Strömungsgeschwindigkeit höher ist als eine zweite Strömungsgeschwindigkeit, die Steuereinrichtung das Gebläse in stärkerem Maß arbeiten lässt.

10. Energieerzeugungssystem nach einem der Ansprüche 1 bis 9, wobei der Luftansaugkanal so ausgebildet ist, dass er bewirkt, dass das Gehäuse und der Luftzuführanschluss der Verbrennungsvorrichtung in Verbindung miteinander stehen, er dem Brennstoffzellensystem und der Verbrennungsvorrichtung über die Öffnung des Luftansaugkanals Luft zuführt, wobei die Öffnung zu der Atmosphäre hin offen ist, und dass Wärmeaustausch zwischen ihm und dem Abgaskanal möglich ist.

11. Energieerzeugungssystem nach Anspruch 10, das des Weiteren umfasst:
eine zweite Temperatur-Erfassungseinrichtung, die an dem Luftansaugkanal vorhanden ist, wobei
wenn eine durch die zweite Temperatur-Erfassungseinrichtung erfasste Temperatur höher ist als eine vierte Temperatur, die Steuereinrichtung das Gebläse in stärkerem Maß arbeiten lässt.

12. Energieerzeugungssystem nach einem der Ansprüche 1 bis 11, wobei das Brennstoffzellensystem des Weiteren eine Wasserstofferzeugungseinrichtung enthält, die einen Reformer enthält, der so eingerichtet ist, dass er ein wasserstoffhaltiges Gas aus einem Ausgangsmaterial und Dampf erzeugt.

13. Verfahren zum Betreiben eines Energieerzeugungssystems, wobei das Energieerzeugungssystem umfasst:
ein Brennstoffzellensystem, das eine Brennstoffzelle, die so eingerichtet ist, dass sie Elektroenergie unter Verwendung eines Brennstoffgases und eines oxidierenden Gases erzeugt, ein Gehäuse, das so eingerichtet ist, dass es die Brennstoffzelle aufnimmt, und ein Gebläse enthält;
eine Verbrennungsvorrichtung, die eine Verbrennungsluft-Zuführeinheit enthält, die so eingerichtet ist, dass sie Verbrennungsluft zuführt; und
einen Ableitkanal, der so ausgebildet ist, dass er bewirkt, dass das Gehäuse und ein Abgasanschluss der Verbrennungsvorrichtung in Verbindung miteinander stehen, und so eingerichtet ist, dass er ein Abgas von dem Brennstoffzellensystem und ein Abgas von der Verbrennungsvorrichtung über eine Öffnung des Ableitkanals an eine Atmosphäre ableitet, wobei die Öffnung zu der Atmosphäre hin offen ist, und:
das Gebläse so eingerichtet ist, dass es ein Gas in dem Gehäuse zu dem Ableitkanal ableitet, um einen Innenraum des Gehäuses zu belüften; und
wenn die Verbrennungsvorrichtung aktiviert ist und das Gebläse arbeitet, das Gebläse in stärkerem Maß veranlasst wird, zu arbeiten.

## Revendications

1. Système de génération d'énergie, comprenant :
- un système de pile à combustible incluant une pile à combustible configurée pour générer de l'énergie électrique en utilisant un gaz combustible et un gaz oxydant, une enveloppe configurée pour loger la pile à combustible et une soufflante ;
- un dispositif de commande ;
- un dispositif de combustion incluant une unité d'alimentation en air de combustion configurée pour délivrer de l'air de combustion ;
- un passage d'admission d'air configuré pour alimenter en air l'enveloppe ; et
- un passage de décharge ménagé pour relier l'enveloppe et un port d'échappement du dispositif de combustion et configuré pour décharger un gaz d'échappement du système de pile à combustible et un gaz d'échappement du dispositif de combustion vers une atmosphère par une ouverture du passage de décharge, l'ouverture étant ouverte vers l'atmosphère, dans lequel
- la soufflante est configurée pour décharger un gaz d'un intérieur de l'enveloppe au passage de décharge afin de ventiler l'intérieur de l'enveloppe ; et
- au cas où le dispositif de commande déterminerait que le dispositif de combustion a opéré lorsque la soufflante est en cours d'opération, le dispositif de commande accroitrait une proportion d'opération de la soufflante.

2. Système de génération d'énergie selon la revendication 1, dans lequel, au cas où une instruction d'activation du dispositif de combustion serait reçue en entrée, le dispositif de commande accroitrait la proportion d'opération de la soufflante.

3. Système de génération d'énergie selon la revendication 1, dans lequel, au cas où au moins une condition parmi une décharge du gaz d'échappement du dispositif de combustion et une alimentation en air de combustion du dispositif de combustion serait détectée lorsque la soufflante est en cours d'opération, le dispositif de commande accroitrait la proportion d'opération de la soufflante.

4. Système de génération d'énergie selon l'une quelconque des revendications 1 à 3, comprenant en outre
- le passage d'admission d'air ménagé au niveau d'un port d'alimentation en air de l'enveloppe et configuré pour alimenter en air le système de pile à combustible depuis une ouverture du passage d'admission d'air, l'ouverture étant ouverte vers l'atmosphère ; et
- un premier détecteur de température prévu au niveau d'au moins un emplacement parmi sur le passage d'admission d'air, sur le passage de décharge et dans l'enveloppe, dans lequel,
- au cas où une température détectée par le premier détecteur de température serait plus élevée qu'une première température, le dispositif de commande accroitrait la proportion d'opération de la soufflante.

5. Système de génération d'énergie selon l'une quelconque des revendications 1 à 3, comprenant en outre
- le passage d'admission d'air ménagé au niveau d'un port d'alimentation en air de l'enveloppe et configuré pour alimenter en air le système de pile à combustible depuis une ouverture du passage d'admission d'air, l'ouverture étant ouverte vers l'atmosphère ; et
- un premier détecteur de température prévu au niveau d'au moins un emplacement parmi sur le passage d'admission d'air, sur le passage de décharge et dans l'enveloppe, dans lequel,
- au cas où une température détectée par le premier détecteur de température serait plus basse qu'une deuxième température, le dispositif de commande accroitrait la proportion d'opération de la soufflante.

6. Système de génération d'énergie selon l'une quelconque des revendications 1 à 3, comprenant en outre
- le passage d'admission d'air ménagé au niveau d'un port d'alimentation en air de l'enveloppe et configuré pour alimenter en air le système de pile à combustible depuis une ouverture du passage d'admission d'air, l'ouverture étant ouverte vers l'atmosphère ; et
- un premier détecteur de température prévu au niveau d'au moins un emplacement parmi sur le passage d'admission d'air, sur le passage de décharge et dans l'enveloppe, dans lequel,
- au cas où une différence entre des températures détectées par le premier détecteur de température avant et après un temps prédéterminé serait plus élevée qu'une troisième température, le dispositif de commande accroitrait la proportion d'opération de la soufflante.

7. Système de génération d'énergie selon l'une quelconque des revendications 1 à 3, comprenant en outre
- un détecteur de pression configuré pour détecter une pression dans le passage de décharge, dans lequel,
- au cas où la pression détectée par le détecteur de pression serait plus élevée qu'une première pression, le dispositif de commande accroitrait la proportion d'opération de la soufflante.

8. Système de génération d'énergie selon l'une quelconque des revendications 1 à 3, comprenant en outre
- un premier détecteur de débit configuré pour détecter un débit d'un gaz traversant le passage de décharge, dans lequel,
- au cas où le débit détecté par le premier détecteur de débit serait plus élevé qu'un premier débit, le dispositif de commande accroitrait la proportion d'opération de la soufflante.

9. Système de génération d'énergie selon l'une quelconque des revendications 1 à 3, comprenant en outre
- un second détecteur de débit configuré pour détecter un débit de l'air de combustion délivré par l'unité d'alimentation en air de combustion, dans lequel,
- au cas où le débit détecté par le second détecteur de débit serait plus élevé qu'un second débit, le dispositif de commande accroitrait la proportion d'opération de la soufflante.

10. Système de génération d'énergie selon l'une quelconque des revendications 1 à 9, dans lequel le passage d'admission d'air est ménagé de façon à : faire en sorte que l'enveloppe et le port d'alimentation en air du dispositif de combustion communiquent l'une avec l'autre ; alimenter en air le système de pile à combustible et le dispositif de combustion depuis l'ouverture du passage d'admission d'air, l'ouverture étant ouverte vers l'atmosphère ; être susceptible d'échanger de la chaleur avec le passage d'échappement.

11. Système de génération d'énergie selon la revendication 10, comprenant en outre :
- un second détecteur de température prévu sur le passage d'admission d'air, dans lequel,
- au cas où une température détectée par le second détecteur de température serait plus élevée qu'une quatrième température, le dispositif de commande accroitrait la proportion d'opération de la soufflante.

12. Système de génération d'énergie selon l'une quelconque des revendications 1 à 11, dans lequel le système de pile à combustible inclut en outre un générateur d'hydrogène incluant une unité de reformage configurée pour générer un gaz contenant de l'hydrogène à partir d'une substance brute et de vapeur.

13. Procédé d'opération d'un système de génération d'énergie,
- le système de génération d'énergie comprenant :
- un système de pile à combustible incluant une pile à combustible configurée pour générer de l'énergie électrique en utilisant un gaz combustible et un gaz oxydant, une enveloppe configurée pour loger la pile à combustible et une soufflante ;
- un dispositif de combustion incluant une unité d'alimentation en air de combustion configurée pour délivrer de l'air de combustion ; et
- un passage de décharge ménagé pour faire en sorte que l'enveloppe et un port d'échappement du dispositif de combustion communiquent l'une avec l'autre et configuré pour décharger un gaz d'échappement du système de pile à combustible et un gaz d'échappement du dispositif de combustion vers une atmosphère par une ouverture du passage de décharge, l'ouverture étant ouverte vers l'atmosphère, dans lequel :
- la soufflante est configurée pour décharger un gaz d'un intérieur de l'enveloppe au passage de décharge afin de ventiler l'intérieur de l'enveloppe ; et
- au cas où le dispositif de combustion serait activé alors que la soufflante serait en cours d'opération, une proportion d'opération de la soufflante serait accrue.
